# EUROPÄISCHE PATENTSCHRIFT

(11) **EP 3 485 233 B1**
(45) Veröffentlichungstag und Bekanntmachung des Hinweises auf die Patenterteilung: **03.06.2020**
(21) Anmeldenummer: 17739285.9
(22) Anmeldetag: 13.07.2017
(51) Int. Cl.: G01F 1/66, G01F 15/18

(54) **ULTRASCHALL-DURCHFLUSSMESSER MIT MESSKANAL**
ULTRASONIC FLOWMETER WITH MEASUREMENT CHANNEL
DÉBITMÈTRE ULTRASONORE ÉQUIPÉ D'UN CANAL DE MESURE

(30) Priorität: 13.07.2016 DE 102016112882
(43) Veröffentlichungstag der Anmeldung: 22.05.2019
(73) Patentinhaber: GWF MessSysteme AG, 6002 Luzern (CH)
(72) Erfinder: KUHLEMANN, Holger, 31157 Sarstedt (DE); FRISTER, Mark, 30173 Hannover (DE); SKRIPALLE, Jürgen, 87660 Irsee (DE); HELFENSTEIN, Markus, 6004 Luzern (CH)
(74) Vertreter: Winter, Brandl, Fürniss, Hübner, Röss, Kaiser, Polte - Partnerschaft mbB
(86) Internationale Anmeldenummer: PCT/EP2017/067765
(87) Internationale Veröffentlichungsnummer: WO 2018/011372

(56) Entgegenhaltungen:
- EP-A1- 0 440 867
- EP-A1- 0 650 034
- EP-A1- 0 890 826
- EP-A1- 2 696 174
- DE-A1- 19 944 411
- DE-A1-102004 061 404

## Beschreibung

Die Erfindung betrifft einen Durchflussmesser zur Messung des Durchflusses von Fluiden in einer Rohrleitung oder dergleichen gemäß dem Oberbegriff des Patentanspruches 1.

Derartige Durchflussmesser können beispielsweise zwei Ultraschall-Wandler aufweisen, die als so genannte "Clip-On-Lösung" im Abstand zu einander an ein Rohrstück der Rohrleitung eingesetzt werden, wobei beide Wandler als Sender und Empfänger wirken. Die Messsignale werden schräg durch die Rohrstückwandung hindurch in das Fluid eingekoppelt.

Aus der Laufzeit der Messsignale vom Sender zum Empfänger kann dann in an sich bekannter Weise die Durchflussgeschwindigkeit bestimmt werden. Derartige Durchflussmesser sind beispielsweise in den Druckschriften WO 2004/036151 A1 und DE 10 2005 057 888 beschrieben.

Nachteilig bei den Clip-On-Durchflussmessern ist, dass die Messsignale die Wandung des Messkanals durchsetzen, so dass bei unterschiedlichen Materialien, aus denen der Messkanal ausgebildet sein kann, auch unterschiedliche Messsignale erhalten werden, so dass der Materialeinfluss bei der Messsignalauswertung berücksichtigt werden muss.

Weiterhin bekannt sind Lösungen mit einem Messeinsatz, in den die Ultraschall-Wandler aufgenommen sind. Dieser Messeinsatz wird in eine Ausnehmung eines Rohrstückes/Messkanals eingesetzt, wobei der eigentliche Messkanal auch ein Teil dieses Messeinsatzes sein kann.

Eine derartige Lösung ist beispielsweise in der DE 101 20 355 A1 offenbart, wobei die beiden Ultraschall-Wandler in Fließrichtung im Abstand zu einander und an gegenüber liegende Seiten des Messkanals angeordnet sind.

In der EP 2 306 160 A1 ist ein Durchflussmesser/Durchflusszähler offenbart, bei dem der Messeinsatz sowohl die Ultraschall-Wandler aufnimmt als auch den eigentlichen Messkanal ausbildet. Dieser Messeinsatz wird an einem tangential verlaufenden Flansch eines Rohrstückes eines Gehäuses des Durchflussmessers befestigt. Dabei taucht durch eine von dem Flansch umgegriffene Ausnehmung des Rohrstückes ein den Messkanal ausbildender Profilkörper ein, der die Strömung innerhalb des Messbereiches beeinflusst und an dem zusätzlich Reflektoren für die Messsignale vorgesehen sind. Bei dieser Lösung sind die beiden Ultraschall-Wandler in einem topfförmigen Gehäuseteil des Messeinsatzes angeordnet, das zur Strömung hin geschlossen ist und in diese eintaucht.

Eine ähnliche Lösung ist in der EP 2 386 836 B1 gezeigt. Bei diesem Ausführungsbeispiel trägt der Messeinsatz zwei in Strömungsrichtung versetzt zu einander angeordnete Ultraschall-Wandler, die ebenfalls in einem topfförmigen Gehäuseteil aufgenommen sind und durch eine von einem Flansch umgriffene Öffnung eines Rohrstückes eines Gehäuses in den Messkanal hinein kragen. Die Strömungsführung innerhalb des Messkanals wird durch einen von der Stirnseite des Gehäuses her einsetzbaren Gehäuseeinsatz bestimmt, der auch Reflektoren für die Ultraschallsignale trägt, so dass der Ultraschall von einem der Ultraschall-Wandler abgegeben und über die Reflektoren zu dem anderen, beispielsweise stromabwärts gelegenen Ultraschall-Wandler reflektiert wird. Selbstverständlich kann die Signalführung auch in umgekehrter Richtung erfolgen.

In der Druckschrift EP 0 890 826 B1 ist ein Durchflussmesser beschrieben, bei dem ebenfalls im Bereich eines Rohrstückes eines Gehäuses ein Messeinsatz an einen tangential verlaufenden Flansch angesetzt wird. Der Messeinsatz trägt zwei UltraschallWandler, die in Ausnehmungen eines Bodens eines Gehäuseteiles eingesetzt sind und dort mittels jeweils einer Dichtung abgedichtet sind. Der gesamte Messeinsatz wird dann gegenüber dem Flansch mit einer weiteren umlaufenden Dichtung abgedichtet, die beide Ultraschall-Wandler umgreift. Auch bei diesem Ausführungsbeispiel wird der Messkanal durch den Messeinsatz ausgebildet, der durch die vom Flansch umgriffene Ausnehmung in das Rohrstück des Gehäuses eingesetzt wird. Dieser Messkanal ist rechteckförmig ausgebildet.

Bei allen vorbeschriebenen Lösungen sind die Reflektoren diametral zu den Ultraschall-Wandlern ausgebildet, so dass zumindest zwei Reflektoren vorgesehen sein müssen, um die Ultraschallsignale zu führen.

Bei dem letztgenannten Durchflussmesser sind die beiden Ultraschall-Wandler jeweils in einem Sensorgehäuse, in der Folge Koppelstück genannt, angeordnet und ragen in Radialrichtung in den Messkanal hinein, so dass sie von dem Fluid umströmt sind.

Nachteilig bei derartigen Lösungen ist, dass die Strömung im Bereich des Messkanals, insbesondere im Bereich der Sensoren abreißt oder verwirbelt ist, so dass es insbesondere bei kleineren Nennweiten zu Messfehlern kommt.

DE 10 2004 061404 A1 offenbart einen Ultraschall-Durchflussmesser mit einem Messeinsatz, der in eine Öffnung einer Rohrleitung eingesetzt ist, wobei der Messkanal zu einem den Sensoren gegenüberliegenden Bereich hin trapezförmig verjüngt ist. Der Messeinsatz enthält zwei Ultraschall-Sensoren. Die den Sensoren gegenüberliegende Wand des Messkanals bildet einen Ultraschall-Reflektor.

EP 2 696 174 A1 offenbart einen Messkanal mit rechteckförmigem Querschnittsprofil. In die den Sensoren gegenüberliegende Wand des Messkanals ist ein Reflektor in eine Ausnehmung bündig eingesetzt. EP 2 696 174 A1 offenbart zudem ein Messrohr mit Koppelstücken für Ultraschallwandler.

EP 0 440 867 A1 offenbart einen Messkanal mit rechteckigen Querschnitt. Die untere Messkanalwand ist U-förmig ausgebildet und besitzt zwei in einem Winkel gegeneinander gerichtete Schrägen, an denen Ultraschallwandler angesetzt sind. Die obere Messkanalwand dient als Ultraschall-Reflektor.

Demgegenüber liegt der Erfindung die Aufgabe zugrunde, einen Durchflussmesser/Durchflusszähler mit verbesserter Messgenauigkeit zu schaffen.

Diese Aufgabe wird durch einen Durchflussmesser mit den Merkmalen des Patentanspruches 1 gelöst.

Vorteilhafte Weiterbildungen der Erfindung sind Gegenstand der Unteransprüche.

Erfindungsgemäß hat der Durchflussmesser einen an eine von einem Fluid durchströmte Rohrleitung ansetzbaren Messkanal, an dem eine Messeinheit gehalten ist, die zumindest zwei zueinander beabstandete Ultraschall-Wandler hat. Die Ein- und Auskopplung der Messsignale in bzw. aus dem Fluid erfolgt über ein gemeinsames oder jeweils ein Koppelstück, das den oder die Messsensoren aufnimmt.

Erfindungsgemäß ist der Messkanal mit einem Querschnittsprofil ausgeführt, das in Sende- und Empfangsrichtung der Sensoren eine größere lichte Weite als quer dazu hat. Dies wird erfindungsgemäß dadurch ausgebildet, in dem der Messkanal ovalförmig ausgeführt ist. Alternativ kann der Messkanal auch trapezförmig ausgebildet sein.

Durch dieses vergleichmäßigte, verrundete Querschnittsprofil kann die Strömung gegenüber den bekannten Lösungen, mit einem Rechteckprofil oder einem runden Profil bei einem optimalen, vergrößerten Signalweg vergleichmäßigt werden, so dass die Messgenauigkeit gegenüber herkömmlichen Lösungen deutlich verbessert ist.

Der gesamte Querschnitt ist vorzugsweise so ausgelegt, dass er etwas geringer als der zulauf- und ablaufseitige Querschnitt des Durchflussmessers ist, so dass die Fluidströmung im Bereich des Messkanals beschleunigt ist. Durch Vergrößerung der Abmessungen in Sende- und Empfangsrichtung werden zusätzlich der Signalweg und damit die Laufzeit des Signals gegenüber einem runden Querschnitt vergrößert.

Bei einem besonders bevorzugten Ausführungsbeispiel ist der Messkanal in etwa mit einer Ovalform ausgebildet, das heißt, der Messkanal ist in Richtung seiner Hochachse nicht von geraden Wandungen, sondern von leicht konkav gewölbten Seitenwandungen begrenzt - dies trägt zur weiteren Vergleichmäßigung der Fluidströmung bei.

Bei einem besonders bevorzugten Ausführungsbeispiel sind die in Richtung der Hochachse (in etwa in Sende- und Empfangsrichtung der Ultraschallsignale) verlaufenden Seitenwandungen ausgewölbt und bilden mit etwa in Richtung der Querachse verlaufenden, in etwa planen oder leicht ausgewölbten Querwandungen die vorgenannte Ovalform aus. Es zeigte sich überraschenderweise, dass eine derartige Ovalgeometrie eine optimale Strömung und eine damit einhergehende maximale Signalqualität gewährleistet.

Bei einer alternativen Lösung kann anstelle der Ovalform ein in etwa trapezförmiger Querschnitt ausgebildet werden, wobei sensorseitig eine vergleichsweise in Querrichtung breite Querwandung und reflektorseitig eine Querwandung mit deutlich geringerer Breite oder eine Verrundung ausgebildet wird.

Vorteilhafterweise ist das Koppelstück bündig in eine Umfangswandung des Messkanals eingesetzt. Das heißt, weder das Koppelstück noch der eigentliche Messsensor oder ein sonstiges Gehäuseteil ragen in den Messkanal hinein, so dass die Messgenauigkeit aufgrund der vergleichmäßigten Strömung gegenüber dem herkömmlichen Lösungen deutlich verbessert ist.

Gemäß einem bevorzugten Ausführungsbeispiel der Erfindung werden die Koppelstücke in eine der Querwandungen des Messsignals bündig eingesetzt.

Die Einkopplung der Signale ist optimal, wenn das Koppelstück einen schräg zur Messkanalachse angestellten Koppelkeil hat, auf dem der Ultraschall-Wandler aufliegt.

Die Abdichtung ist besonders einfach, wenn dieses Koppelstück mittels einer Dichtung im Messkanal abgedichtet ist.

Vorteilhafterweise kann das Verhältnis der Breite des Messkanals im Scheitel der Auswölbung der Seitenwandung zur Breite der Querwandungen in Querrichtung > 1.2, vorzugsweise etwa 1.3 bis 1.6 betragen. Alternativ oder zusätzlich kann das Verhältnis der Höhenerstreckung der Seitenwandung zur Breite der Querwandung > 1.5, vorzugsweise etwa 1.5 bis 2 sein.

Die Fluidströmung lässt sich weiter vergleichmäßigen, wenn, beispielsweise bei geringen Nennweiten, sich das Koppelstück bis in die Seitenwandung hinein erstreckt. Auch in diesem Bereich verläuft das Koppelstück dann bündig zur Seitenwandung, so dass keinerlei die Strömung störende auskragende Bauelemente vorhanden sind.

Bei einem besonders einfach aufgebauten Ausführungsbeispiel sind das Koppelstück oder mehrere Koppelstücke an ein Messgehäuse angesetzt, das die Steuerelektronik, weitere Sensoren, ein Batteriepack, Kommunikationsmodule und/oder eine Stromversorgung aufnimmt. Dabei kann das Batteriepack vorzugsweise auswechselbar ausgeführt sein.

Bei einem Ausführungsbeispiel der Erfindung ist das Messgehäuse mit einem Boden ausgeführt, in den das oder die Koppelstücke mit den Ultraschall-Wandlern direkt oder mittels einer Sensoraufnahme eingesetzt sind.

Der Aufbau des Gehäuses des Durchflussmessers ist weiter vereinfacht, wenn der Messkanal einen Flansch hat, der zumindest eine Ausnehmung umgreift, in die zumindest ein Koppelstück eintaucht und an der ein Systemadapter des Messgehäuses befestigt ist.

Gemäß der Erfindung ist an der von den Ultraschall-Wandlern entfernten Querwandung eine Reflektoreinrichtung angeordnet, die vorzugsweise bündig in eine Tasche der Querwandung eingesetzt ist.

Durch das bündige Einsetzen des Reflektors/Spiegel und/oder der Sensoren/Koppelstücke in den Messkanal werden Verwirbelungen und Strömungsabrisse im Bereich dieser Komponenten und eine damit einhergehende Schmutzablagerung und die daraus resultierende Signalverfälschung verhindert.

Der Aufbau lässt sich weiter vereinfachen, wenn das Rohrstück den Messkanal ausbildet. Dies setzt voraus, dass das Rohrstück dann entsprechend der oben definierten Vorgaben (Ovalform) ausgeführt ist. Alternativ kann der Messkanal auch in das Rohrstück eingesetzt werden.

Bei einem weiteren Ausführungsbeispiel hat der Durchflussmesser ein Gehäuse, das zwei einström- und abströmseitige Befestigungsflansche aufweist, zwischen denen sich das Rohrstück und/oder der Messkanal erstreckt, wobei der Durchströmungsquerschnitt in Einlauf- bzw. Auslaufbereich der Befestigungsflansche kleiner als im Messkanal ist.

Die Signalqualität lässt sich weiter verbessern, wenn das Koppelstück aus PEEK, PSU oder PEI hergestellt ist.

Bei einer weiterhin bevorzugten Lösung ist in einem Koppelstück ein Doppelsensor aufgenommen, so dass zwei etwa parallele Signalpfade ausgebildet werden.

Zur weiteren Verbesserung der Messgenauigkeit kann in jedem Koppelstück ein Referenzpfad ausgebildet sein, der in der Geometrie des Koppelstücks und dessen Material bestimmt ist.

In einem derartigen Koppelstück kann ein Temperatursensor oder ein sonstiger Sensor aufgenommen werden, über den beispielsweise eine Erwärmung des Fluids oder ds Koppelstücks während des Messens erfasst und eine entsprechende Signalkorrektur generierbar ist.

Die Anmelderin behält sich vor, auf den Doppelsensor oder die Geometrie des Koppelstücks mit einem Referenzpfad und/oder mit einem zusätzlichen Sensor oder die Art der Abdichtung des Messeinsatzes eigene unabhängige Patentansprüche zu richten, die zum Gegenstand von Teilanmeldungen oder dergleichen gemacht werden können.

Nach einem Ausführungsbeispiel der Erfindung sind die Koppelstücke zu einem Messbalken zusammengefasst.

Auch dieser Messbalken kann mit einem Referenzpfad ausgebildet sein, über den beispielsweise eine Nullpunktdriftkorrektur ermöglicht ist.

Der Einfluss von Luftblasen, Sedimentationen kann durch eine Schrägstellung oder eine waagrechte Positionierung des Profilquerschnittes verringert werden - auch diese Lösung kann zum Gegenstand eines eigenen Patentbegehrens gemacht werden.

Bevorzugte Ausführungsbeispiele werden im Folgenden anhand schematischer Zeichnungen näher erläutert. Es zeigen:
Figur 1 ein erstes Ausführungsbeispiel eines mit einem Messeinsatz ausgeführten Durchflussmessers;
Figuren 2a, 2b weitere Teildarstellungen des Ausführungsbeispiels eines Durchflussmessers gemäß Figur 1;
Figur 3 Ansichten eines weiteren Ausführungsbeispiels eines erfindungsgemäßen Durchflussmessers;
Figur 4 Ansichten eines dritten Ausführungsbeispiels eines erfindungsgemäßen Durchflussmessers;
Figur 5 ein weiteres Ausführungsbeispiel eines Durchflussmessers, wobei ein Messkanal durch einen Messeinsatz ausgebildet ist;
Figur 6 eine Teildarstellung eines Messbalkens/Koppelstückes des Ausführungsbeispiels gemäß Figur 5;
Figur 7 zwei weitere Ausführungsbeispiele eines Durchflussmessers;
Figur 8 Ansichten eines Gehäuses der Durchflussmesser gemäß Figur 7;
Figur 9 eine weitere Darstellung des Ausführungsbeispiels gemäß Figur 7a);
Figur 10 eine Explosionsdarstellung eines Messeinsatzes des Ausführungsbeispiels gemäß Figur 9, 7a);
Figur 11 eine weitere Ansicht des Messansatzes gemäß Figur 10 mit einer Einzeldarstellung des Messbalkens gemäß Figur 6;
Figur 12 Ansichten eines Batterypacks eines erfindungsgemäßen Durchflussmessers;
Figur 13 eine Explosionsdarstellung des Batterypacks gemäß Figur 12;
Figur 14 eine Prinzipdarstellung eines weiteren Ausführungsbeispiels eines erfindungsgemäßen Durchflussmessers mit Messansatz;
Figuren 15a), b) und c) Ansichten eines weiteren Ausführungsbeispiels eines Durchflussmessers mit Messansatz;
Figur 15d) eine Variante des Ausführungsbeispiels gemäß den Figuren 15a), b), c);
Figuren 16a), b), c) Hauptbaugruppen eines weiteren Ausführungsbeispiels eines Durchflussmessers mit Messansatz;
Figuren 17a), b), c) Varianten des Ausführungsbeispiels gemäß Figur 16 mit externen Modulen;
Figuren 18 und 19 Varianten eines Gehäuses eines Durchflussmessers gemäß den Figuren 16, 17;
Figur 20 eine Prinzipskizze zur Erläuterung des Aufbaus eines Ultraschall-Wandlers;
Figur 21 ein Ausführungsbeispiel eines Messeinsatzes für ein Gehäuse gemäß Figur 19;
Figur 22 Darstellungen eines Messansatzes für ein Gehäuse gemäß Figur 18;
Figur 23 eine Variante des Ausführungsbeispiels eines Messansatzes gemäß Figur 22;
Figur 24 eine Prinzipskizze zum Aufbau eines Doppelsensors;
Figur 25 Prinzipskizzen zur Erläuterung des Verlaufs der Signalpfade eines Doppelsensors;
Figur 26 ein Ausführungsbeispiel eines Durchflussmessers mit einem zusätzlichen Sensor, beispielsweise einem Drucksensor;
Figur 27 Darstellungen eines Durchflussmessers mit einem externen Sensormodul;
Figur 28 eine Variante eines Doppelsensors mit einem zusätzlichen Sensor, beispielsweise einem Temperatursensor;
Figur 29 Darstellungen von drei Ausführungsbeispielen für in ein Koppelstück integrierte Referenzpfade zur Nullpunktdriftkorrektur;
Figur 30 Darstellungen eines weiteren Ausführungsbeispiels eines Durchflussmessers mit Doppelsensoren;
Figur 31 Darstellungen eines Durchflussmessers bei dem an Stelle der Doppelsensoren vier Einzelsensoren verwendet werden und
Figur 32 eine Gegenüberstellung der Durchflussmesser aus den Figuren 30, 31.

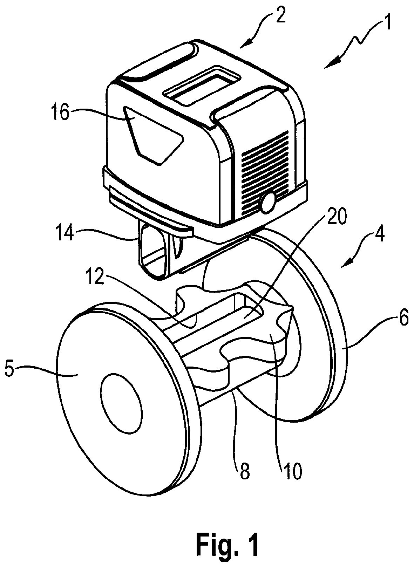

Figur 1 zeigt ein erstes Ausführungsbeispiel eines Durchflussmessers 1, der mit einem Messeinsatz 2 ausgeführt ist. Der Durchflussmesser 1 hat ein Gehäuse 4, das zwei Befestigungsflansche 5, 6 hat, zwischen denen sich ein Rohrstück 8 erstreckt. Dieses Gehäuse 4 wird in eine vorhandene Rohrleitung eingesetzt, die von dem Medium/Fluid durchströmt ist, dessen Durchfluss gemessen werden soll.

Das Rohrstück 8 hat einen etwa tangential angeordneten Flansch 10, der eine Ausnehmung 12 umgreift. Der eigentliche Messeinsatz 2 hat einen Messkanal 14, dem eine im Folgenden beschriebene Sensorik zugeordnet ist.

Die Steuerelektronik und Stromversorgung und sonstige zur Signalverarbeitung erforderliche Komponenten des Durchflussmessers 1 sind in einem Messgehäuse 16 aufgenommen. An diesem ist des Weiteren noch eine in Figur 1 nicht sichtbare Anzeige für den gemessenen Durchfluss vorgesehen. Der Messkanal 14 wird durch die Ausnehmung 12 des Gehäuses 4 hindurch in den Querschnitt des Rohrstücks 8 eingesetzt und das Messgehäuse 16 dann am Flansch 10 festgelegt.

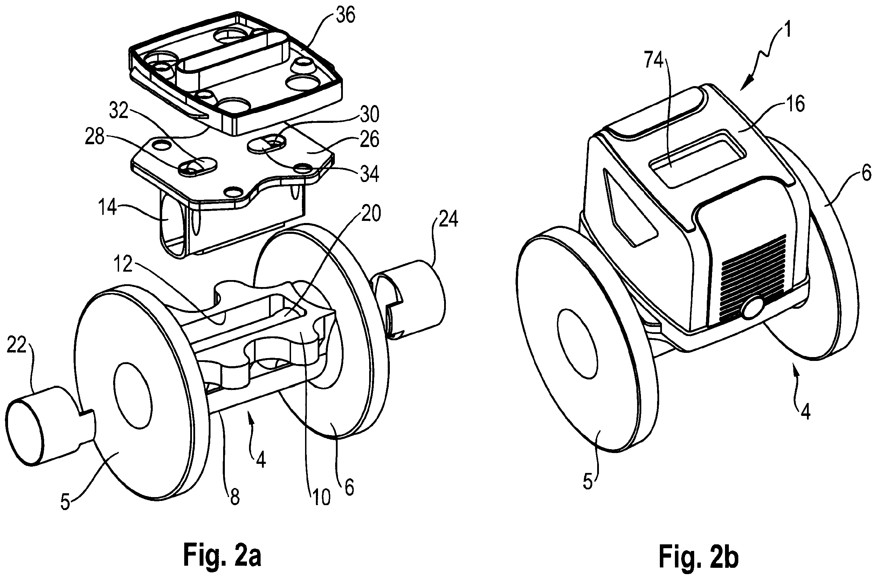

Figur 2a) zeigt eine Explosionsdarstellung eines Teils des Messeinsatzes des Durchflussmessers gemäß Figur 1 und Figur 2b) zeigt den Durchflussmesser im montierten Zustand.

In der Darstellung gemäß Figur 2a) sieht man das Gehäuse 4 mit dem Rohrstück 8, das zwischen den beiden Befestigungsflanschen 5, 6 liegt. Tangential zum Rohrstück 8 (in Figur 2a) nach oben weisend) ist der Flansch 10 ausgebildet, der die Ausnehmung 12 umgreift, durch die hindurch der Messeinsatz 2, insbesondere der Messkanal 14 in einen Innenraum 20 des Rohrstücks 8 einführbar ist.

Zur Strömungsführung im Einlass- bzw. Auslassbereich wird in das Rohrstück 8 bzw. den einlass- und auslassseitigen Befestigungsflansch ein Einlauf- und ein Auslaufkörper 22, 24 eingesetzt, die im montierten Zustand eine im Wesentlichen fluiddichte Verbindung zum Messkanal 14 herstellen.

Wie im Folgenden noch näher erläutert, hat dieser Messkanal 14 keinen kreisförmigen oder rechteckförmigen Querschnitt sondern ist zur Verminderung von Strömungsabrissen, Turbulenzen in einer Ovalform ausgeführt. Beim dargestellten Ausführungsbeispiel ist der Messkanal 14 an einem Systemadapter 26 des Messeinsatzes 2 bzw. des Messgehäuses 16 befestigt. An diesem Systemadapter 26 sind des Weiteren zwei Ultraschall-Wandler - im Folgenden Sensoren 28, 30 genannt - vorgesehen, die an Koppelstücken 32, 34 angeordnet sind, über die die Ultraschall-Signale in das Fluid ein- bzw. ausgekoppelt werden.

In Figur 2a) oben liegend ist ein auf den Systemadapter 26 aufgesetzter Gehäuseboden 36 des Messgehäuses 16 dargestellt.

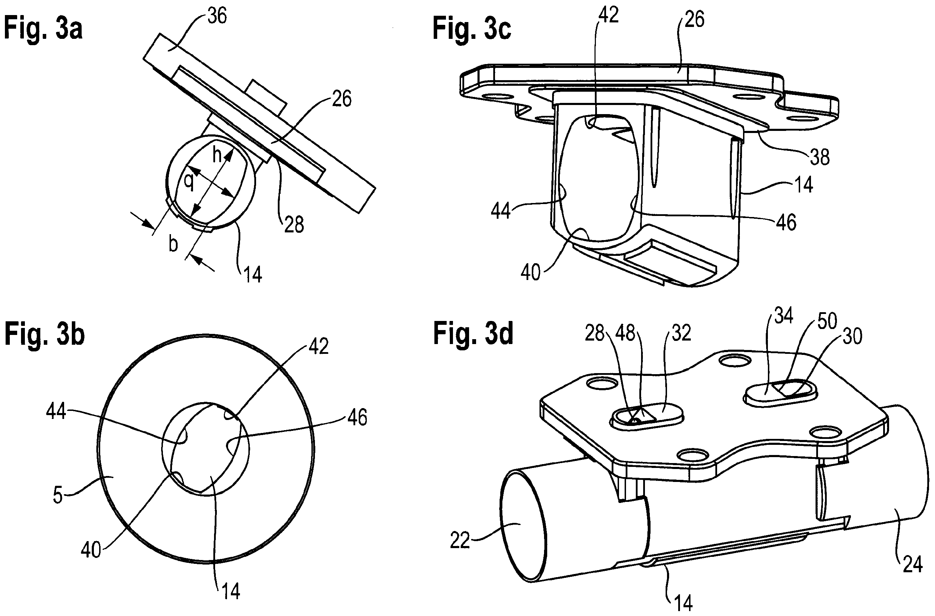

In den Figuren 3a) und 3b) ist der Messkanal 14 dargestellt, der seinerseits am Systemadapter 26 befestigt ist. Wie in Figur 3a) angedeutet, wird der Messkanal 14 im Anbindungsbereich an den Systemadapter 26 von einem umlaufenden Dichtring 38 umgriffen, der im montierten Zustand auf dem Flansch 10 aufliegt. Der Systemadapter 26 wird seinerseits von dem Gehäuseboden 36 überdeckt.

Man erkennt in dieser Darstellung, dass der beispielsweise aus Kunststoff gefertigte Messkanal 14 keinen kreisförmigen sondern einen ovalen Durchströmungsquerschnitt mit einer Hochachse h und einer Querachse q hat. Die Hochachse h ist dabei länger als die Querachse q ausgeführt. Beim dargestellten Ausführungsbeispiel ist das Verhältnis der Maße h : q > 1.2, vorzugsweise etwa 1.5 ausgeführt. Das Verhältnis der Länge der Hochachse h zu der in Figur 3a) eingezeichneten Breite b ist (a : b) > 1.5, vorzugsweise etwa 2.

Die Breite b kennzeichnet dabei die Breite von Querwandungen 40, 42, die in etwa als Planflächen oder leicht konkav gekrümmte Wandungen ausgeführt sind. In Richtung der Hochachse h erstrecken sich Seitenwandungen 44, 46, die gemeinsam mit den Querwandungen 40, 42 einen in etwa ovalen Querschnitt des Messkanals 14 begrenzen. Diese ovalisierte, verrundete Querschnittsform verringert gegenüber den herkömmlichen rechteckförmigen oder kreisförmigen Kanalquerschnitten einen Strömungsabriss und eine Verwirbelung, wobei durch die große Höhenerstreckung h die Signallaufzeit und der Signalweg vergrößert ist und durch die vergleichsweise geringe Breite q, b in Querrichtung die Strömungsgeschwindigkeit gegenüber dem Einlauf- und Auslaufbereich deutlich erhöht werden kann. Dabei ist vorausgesetzt, dass der Einlaufkörper 22 und der Auslaufkörper 24 einen Querschnitt aufweisen, der kleiner ist als der durchströmte Querschnitt des Messkanals, so dass entsprechend eine Geschwindigkeitserhöhung erfolgt.

Figur 3c) zeigt die Anordnung gemäß Figur 3a) in einer dreidimensionalen Darstellung in einer etwas anderen Ansicht. Wie erwähnt, ist der Messkanal 14 mit dem ovalen Messkanalquerschnitt aus Kunststoff gefertigt und wird von dem am Systemadapter 26 befestigten Dichtring 38 umgriffen. Im Systemadapter 26 sind die beiden Koppelstücke 32, 34 angeordnet, von denen in der Darstellung gemäß Figur 3c) lediglich das Koppelstück 32 sichtbar ist. In dieser Darstellung erkennbar ist, dass das Koppelstück 32 bündig in die plane oder leicht ausgewölbte sensorseitige Querwandung 42 eingesetzt ist, so dass der Messkanal 14 oder genauer gesagt dessen Umfangswandung weitestgehend glattflächig mit verrundeten Übergängen ausgeführt ist.

Figur 3d) zeigt eine Draufsicht auf die Anordnung gemäß Figur 3c), wobei der Einlaufkörper 22 und der Auslaufkörper 24 an den Messkanal 14 angesetzt sind. Gemäß dieser Darstellung stehen die beiden Koppelstücke 32, 34 etwas nach oben über die in Figur 3 sichtbare Großfläche des Systemadapters 26 zum nicht dargestellten Gehäuseboden 36 hin vor. Wie im Folgenden noch näher beschrieben wird, hat jedes Koppelstück 32, 34 einen Koppelkeil 48, 50, an dem - wie im Folgenden noch näher erläutert wird - der Sensor anliegt. Der Keilwinkel des Koppelkeils 48, 50 ist so gewählt, dass die vom Sensor 28, 30 generierten Ultraschall-Signale schräg in den Messkanal 14 eingekoppelt werden.

Wie in den Figuren 3a), 3b) dargestellt, kann der Messkanal 14 oder der in diesem vorgesehene Strömungsquerschnitt so ausgerichtet sein, dass dessen Hochachse h schräg zur Schwerkraftrichtung angestellt ist. Auf diese Weise wird eine Beeinträchtigung der Messsignale durch Sedimentationen, Luftblasen oder dergleichen verhindert. Diese Schrägstellung ist bei allen beschriebenen Ausführungsbeispielen möglich. Wie eingangs erwähnt, ist auch eine waagrechte Anordnung möglich, wobei dann die Hochachse des Ovalprofils quer zur Schwerkraftrichtung angeordnet ist.

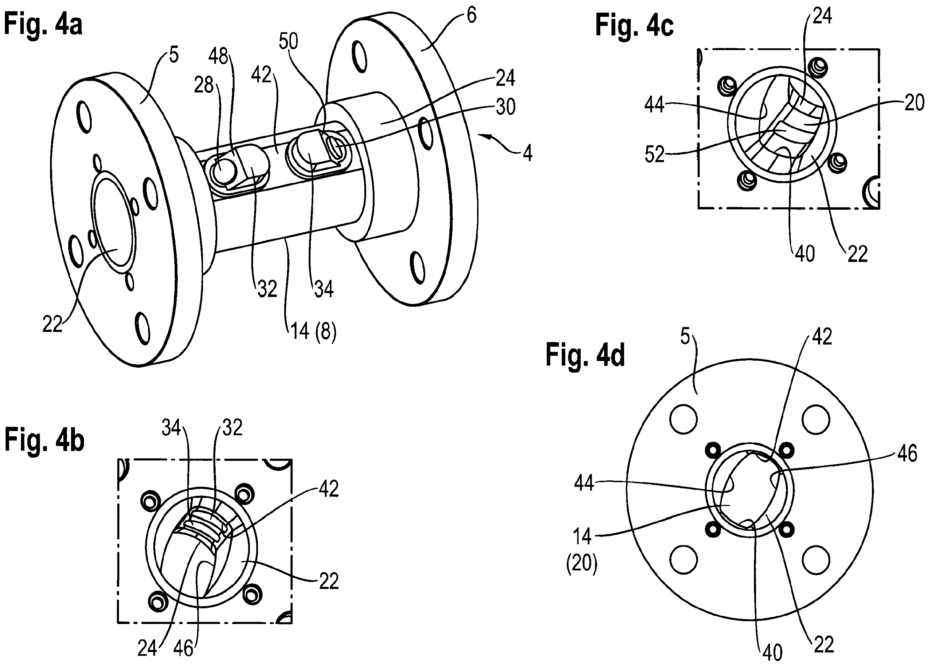

Figur 4 zeigt eine Variante, bei der der Durchflussmesser 1 nach dem Konzept "Messansatz" ausgeführt ist. Dabei sind die beiden Koppelstücke 32, 34 direkt in die Querwandung 42 eingesetzt. Der Messkanal 14 mündet wiederum über die Einlauf- und Auslaufkörper 22, 24 in den beiden außen liegenden Befestigungsflanschen 5, 6. Bei diesem Ausführungsbeispiel ist somit der Messkanal 14 direkt durch das Rohrstück 8 ausgebildet, während beim Ausführungsbeispiel gemäß den Figuren 1 bis 3 der Messkanal 14 in das Rohrstück 8 eingesetzt ist. Auch bei dem in Figur 4 dargestellten Ausführungsbeispiel ist wiederum der ovalisierte Querschnitt des Messkanals 14 vorgesehen, dessen Hochachse bei dem dargestellten Ausführungsbeispiel schräg zur Schwerkraftrichtung angestellt ist - dies ist besonders deutlich in den Figuren 4b), 4c) und 4d) dargestellt. Gemäß der Figur 4a) sind - wie oben ausgeführt - die beiden Koppelstücke 32, 34 in entsprechende Ausnehmungen des Rohrstücks 8 eingesetzt und haben jeweils einen Koppelkeil 48, 50, auf dem der jeweilige Sensor 28, 30 abgestützt ist. Diese Sensoren können beispielsweise durch eine Piezokeramik gebildet sein, die über Elektroden mit der im Messgehäuse 16 aufgenommenen Steuerung kontaktiert sind.

Der Anstellwinkel des Koppelkeils 48, 50 ist so gebildet, dass die von den beiden Sensoren in den Messkanal 14 eingekoppelten bzw. die ausgekoppelten Signale etwa V-förmig zu einander angestellt sind. Die Signalführung ist nicht auf eine derartige V-Form beschränkt. So kann der Signalpfad beispielsweise auch W-förmig ausgebildet sein, wobei das Messsignal dann von einem ersten, gegenüberliegenden Reflektor zurück zu einem weiteren Reflektor umgelenkt wird, der zwischen den beiden Sensoren angeordnet ist. Von diesem wird dann das Signal in Richtung auf einen dritten Reflektor gerichtet, der wiederum gegenüberliegend angeordnet ist und über den dann das Messsignal zu dem weiteren Sensor reflektiert wird. Die Anordnung des letztgenannten Reflektors erfolgt in gleicher Weise wie der erstgenannte Reflektor. Der mittige, sensorseitige Reflektor kann dann am Messkanal oder aber auch am Messansatz / Messeinsatz ausgebildet sein. Die Abdichtung der Koppelstücke 32, 34 im Messkanal 14 erfolgt über nicht dargestellte Dichtringe.

In der Darstellung gemäß Figur 4b) ist wiederum gut sichtbar, dass die fluidseitigen Koppelflächen der beiden Koppelstücke 32, 34 bündig in die zugehörige Querwandung 42 eingesetzt sind, so dass der Messkanal 14 von glattflächigen Umfangswandungen umgeben ist.

Figur 4c) zeigt den Messkanal in einer Ansicht von oben, so dass die den Koppelstücken 32, 34 gegenüber liegende Querwandung 40 sichtbar ist. In diese ebene oder leicht verrundete Querwandung 40 ist ein Reflektor 52 eingesetzt, der im Scheitel des von den beiden Sensorachsen gebildeten V liegt. Der Signalpfad erstreckt sich somit beispielsweise von einem Sensor 28 über das Koppelstück 48 in den Querschnitt des Messkanals 14 hinein zum Reflektor 52 hin. Das Messsignal wird dann vom Reflektor 52 hin zum weiteren Sensor 30 reflektiert, wobei das reflektierte Signal über das zugehörige Koppelstück 34 und den Koppelkeil 50 zum Sensor 30 geführt ist.

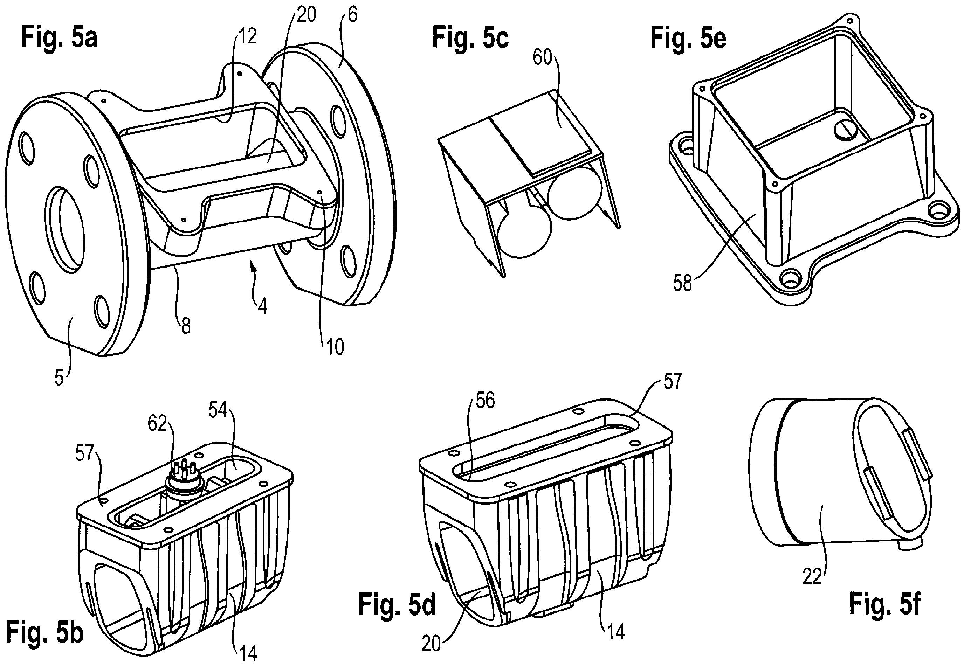

Figur 5 zeigt eine Variante einer Ausführung mit "Messeinsatz". Man erkennt in dieser Darstellung (siehe Fig. a)) das vorbeschriebene Gehäuse 4 mit den beiden Befestigungsflanschen 5, 6, zwischen denen sich das Rohrstück 8 mit dem Flansch 10 erstreckt. In die vom Flansch 10 umgriffene Ausnehmung 12 des Gehäuses 4 wird der in Fig. 5d) dargestellte Messkanal 14 eingesetzt. Dieser hat seinerseits eine taschenförmige Aufnahme 56, in die ein Messbalken 54 (Fig. 5b) eingesetzt ist. Dieser einstückige Messbalken 54 ersetzt den vorbeschriebenen Aufbau mit zwei Koppelstücken und den zugehörigen Sensoren. Wie insbesondere in den Figuren 5d) und 5b) dargestellt, hat der Messkanal 14 eine die Aufnahme 56 umgreifende Konsole 57, mit der er an den Systemadapter 26 angesetzt ist.

Bei dem in Figur 5e) dargestellten Ausführungsbeispiel hat der Systemadapter 26 einen Steuergehäuserahmen 58, der einen Teil des Messgehäuses 16 ausbildet und in den ein in Figur 5c) dargestelltes Elektronikmodul 60 eingesetzt wird, das alle elektronischen Bauteile zur Stromversorgung und Signalverarbeitung enthält. Dieses Elektronikmodul 60 ist über einen am Messbalken 54 angeordneten Stecker 62 mit den Sensoren 28, 30 verbunden.

In Figur 5f) ist der Einlaufkörper 22 dargestellt, der an den Messkanal 14 im Wesentlichen fluiddicht angesetzt ist. Der Auslaufkörper 24 hat einen entsprechenden Aufbau. Wie aus dieser Darstellung entnehmbar, ist der messkanalseitige Endabschnitt des Einlaufkörpers 22 im Hinblick auf das Querschnittsprofil auf das Ovalprofil des Messkanals 14 angepasst. Demzufolge wird die Strömung bereits innerhalb des Einlaufkörpers 22 beschleunigt, da sich der Querschnitt von dem kreisrunden Eingangsquerschnitt zu dem ovalen Messquerschnitt verjüngt.

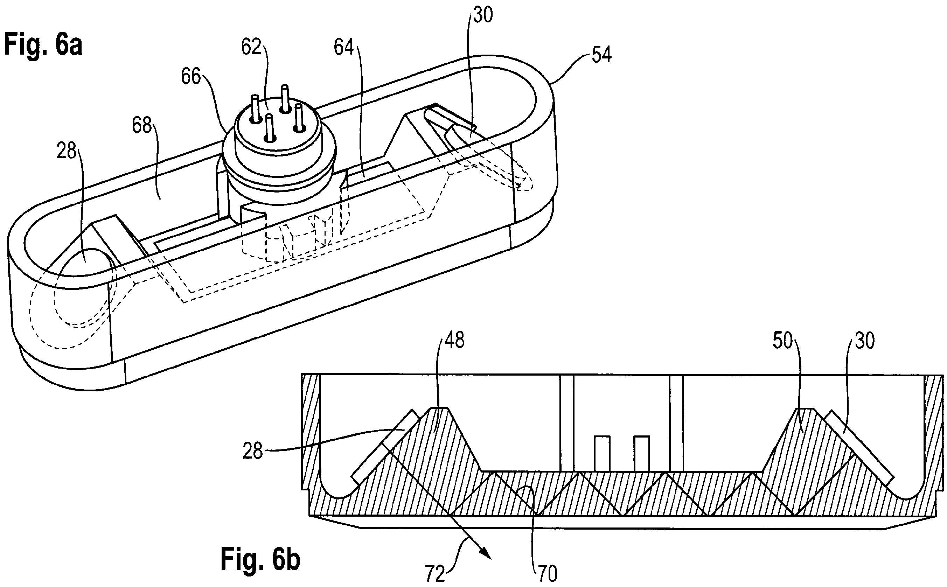

Die Figuren 6a), 6b) zeigen Einzeldarstellungen des in die Aufnahme 56 eingesetzten Messbalkens 54. Dieser ist aus Kunststoff, beispielsweise aus PSU, PEEK, PEI oder einem sonstigen geeigneten Werkstoff gefertigt und passgenau in die Aufnahme 56 des Messkanals oder genauer gesagt der Konsole 57 eingesetzt. Die beiden als Piezoelemente/Piezokeramik ausgeführten Sensoren 28, 30 sind an Koppelkeile 48, 50 angesetzt, die einstückig am Messbalken 54 ausgebildet sind. Wie insbesondere aus Figur 6b) entnehmbar ist, ist der Messbalken 54 topfförmig ausgebildet. In dem vom Messbalken 54 umgriffenen Raum ist eine Leiterplatte 64 angeordnet, die einerseits mit dem Stecker 62 und andererseits mit den beiden Sensoren 28, 30 zur Stromversorgung und Signalübertragung verbunden ist. Wie aus der Darstellung gemäß Figur 6a) weiterhin hervorgeht, ist der Stecker 62 über eine Dichtung 66 im Steuergehäuse abgedichtet. Der vom Messbalken 54 umgriffene Raum ist dann mit einer Vergussmasse 68 verfüllt, so dass die Sensoren 28, 30, die Leiterplatte 64, die entsprechenden Kontaktierungen, etc. fluiddicht eingebettet und fixiert sind.

Wie in Figur 6b) dargestellt, ist im Messbalken 54 zwischen den beiden zu einander angestellten Koppelkeilen 48, 50 ein Referenzpfad 70 ausgebildet. Das von einem Sensor 28 abgegebene Signal kann sich im Prinzip entlang von zwei Signalpfaden zum jeweils anderen Sensor 30 bewegen. Der eine Signalpfad verläuft entlang des in Figur 6b) dargestellten Referenzpfades 70 durch den Messbalken 54 hindurch direkt zum benachbarten Sensor 30. Der andere Signalpfad 72 verläuft entlang eines vergleichsweise kurzen Weges im Messbalken 54 und wird dann über diesen in das Medium eingekoppelt. Dieser Signalpfad 72 verläuft weiter hin zum Reflektor 52 (nicht dargestellt in Figur 6) und von diesem in Richtung zum anderen Sensor 30, wobei das Signal aus dem Fluid in den Messbalken 54 eingekoppelt wird und dann entlang eines relativ kurzen Weges durch den Messbalken 54 hindurch auf den Sensor 30 trifft.

Der Referenzpfad 70 liefert der Messelektronik ein Referenzsignal, das unabhängig vom Durchfluss des Fluids ist und daher zur Nullpunktdriftkorrektur verwendet werden kann.

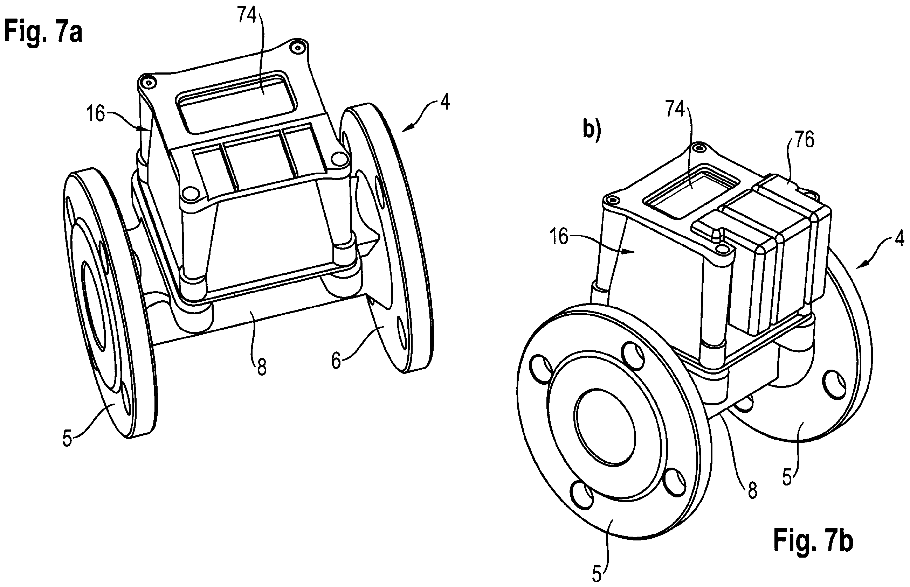

Anhand der Figuren 7 bis 11 werden weitere Varianten des Ausführungsbeispiels gemäß Figur 5, 6 erläutert. Figur 7 zeigt dabei zwei konkrete Ausführungsbeispiele von Durchflussmessern 1, die nach dem Prinzip "Messansatz" ausgeführt sind. Figur 7a) zeigt dabei einen Durchflussmesser 1 mit dem Gehäuse 4, an das das Messgehäuse 16 mit der Steuerelektronik, dem Zählwerk sowie einer in Figur 7a) dargestellten Digitalanzeige 74 angesetzt ist. Figur 7b) zeigt eine Variante, bei der zusätzlich an das Messgehäuse 16 Kommunikationsmodule 76 angesetzt sind, über die beispielsweise eine drahtlose Signalübertragung zu einem Rechner, einer mobilen Auslesestation, eine Verbindung zu Sensoren oder dergleichen hergestellt werden kann.

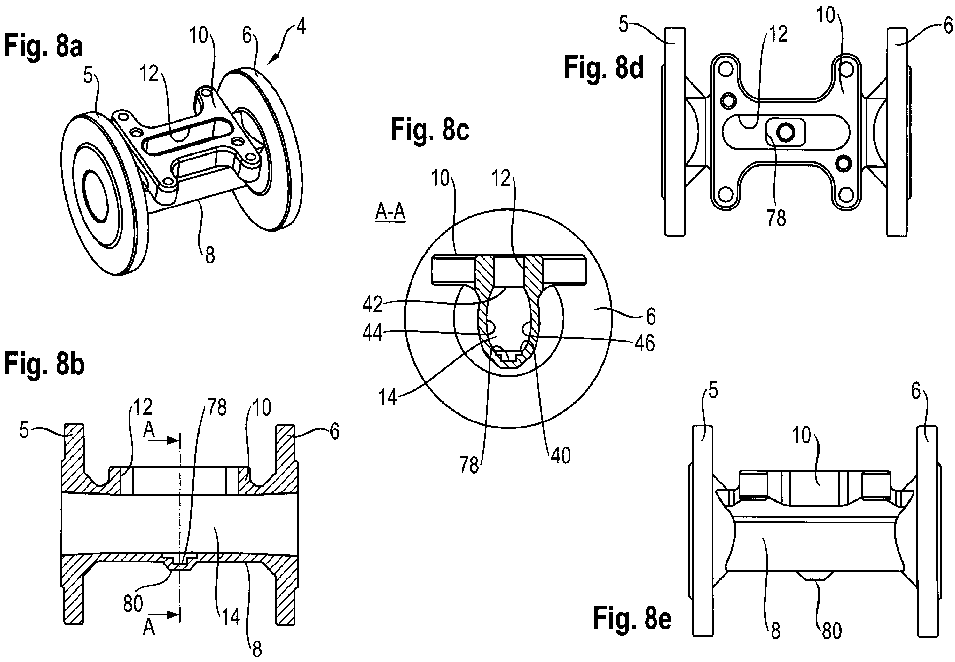

Die Figuren 8a) bis 8e) zeigen den prinzipiellen Aufbau des Gehäuses 4. Da der Grundaufbau des Gehäuses 4 demjenigen der vorbeschriebenen Gehäuse weitestgehend entspricht, werden nur einige Designmerkmale erläutert und im Übrigen auf die obigen Ausführungen zum Gehäuseaufbau verwiesen.

Figur 8a) zeigt eine dreidimensionale Darstellung des Gehäuses 4 mit den beiden Befestigungsflanschen 5, 6 und dem dazwischen liegenden Rohrstück 8, an dem der tangential verlaufende Flansch 10 angeordnet ist. Dieser umgreift die Ausnehmung 12, in die der Messeinsatz, im vorliegenden Fall der Messbalken 54 fluiddicht eingesetzt ist.

Figur 8b) zeigt einen Längsschnitt durch das Gehäuse 4 gemäß Figur 8a). Man erkennt in dieser Darstellung die den Flansch 10 durchsetzende Ausnehmung 12, die in dem vom Rohrstück 8 begrenzten Messkanal 14 mündet.

Diametral zur Ausnehmung 12 ist im Messkanal 14 eine Tasche 78 ausgebildet, in die der vorstehend beschriebene Reflektor 52 passgenau eingesetzt, vorzugsweise eingepresst wird. Figur 8c) zeigt einen Schnitt entlang der Linie A-A in Figur 8b). In dieser Darstellung erkennt man gut die Tasche 78, die in der unten liegende Querwandung 40 des Messkanals 14 mündet. Die Ausnehmung 12 mündet in entsprechender Weise in der oben liegenden Querwandung 42. Der nicht dargestellte Reflektor 52 wird bei diesem Ausführungsbeispiel durch die Ausnehmung 12 hindurch in die Tasche 78 eingesetzt.

Üblicherweise ist das Gehäuse 4 pulverbeschichtet. Die Pulverbeschichtung ist jedoch im Bereich der Tasche 78 vorzugsweise nicht ausgebildet, sodass die Presspassung mit hohe Genauigkeit herstellbar ist. Die Anmelderin behält sich vor, auf diese Presspassung einen eigenen unabhängigen Anspruch zurichten.

Figur 8d) zeigt eine Draufsicht auf das Gehäuse 4. In dieser Darstellung ist deutlich die durch die Ausnehmung 12 hindurch erreichbare Tasche 78 dargestellt. Gut erkennbar ist auch die H-förmige Dichtfläche des Flansches 10 mit den Befestigungsausnehmungen, über die das Messgehäuse 16 am Flansch 10 befestigt wird.

Figur 8e) zeigt eine Seitenansicht des Messgehäuses 4. Gut sichtbar ist ein radial auskragender Vorsprung 80, in dem die Tasche 78 ausgebildet ist. Dieser Vorsprung 80 ist diametral zum Flansch 10 ausgebildet.

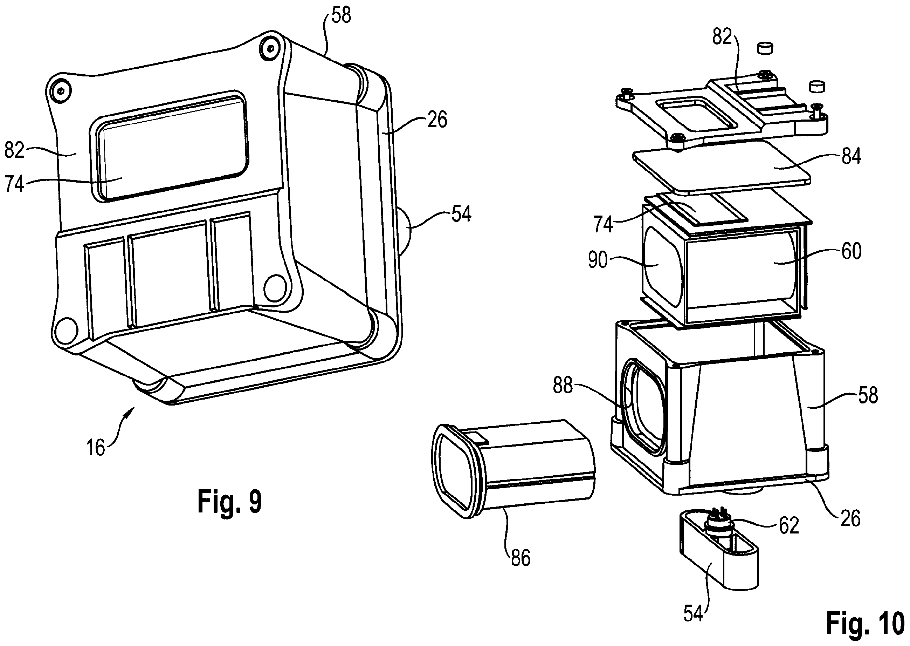

Figur 9 zeigt eine Einzeldarstellung des Messgehäuses 16 des in Figur 7a) dargestellten Ausführungsbeispiels. Dementsprechend hat das Gehäuse den bereits beschriebenen Systemadapter 26, der einstückig mit dem Steuergehäuserahmen 58 ausgebildet ist, der seinerseits das Elektronikmodul 60 und die Digitalanzeige 74 aufnimmt. Das Messgehäuse 16 ist zum Betrachter hin in Figur 9 von einem Gehäusedeckel abgeschlossen.

Wie bereits vorstehend erläutert, ist der Messbalken 54 am Systemadapter 26 gehalten und derart ausgeführt, dass er bündig in die Ausnehmung 12 des Gehäuses 4 (siehe Figur 8) eintaucht.

Figur 10 zeigt nochmals eine Explosionsdarstellung des Messgehäuses 16. Wie erläutert, besteht dieses im Prinzip aus dem Systemadapter 26 mit dem Steuergehäuserahmen 58. Das Elektronikmodul 60 wird in den Steuergehäuserahmen 58 eingesetzt und über den Stecker 62 mit dem Messbalken 54 kontaktiert. Das Elektronikmodul 60 beinhaltet die vorbeschriebene Digitalanzeige 74, den Zähler und die sonstigen, für die Signalverarbeitung und Stromversorgung erforderlichen Komponenten. Die Digitalanzeige 74 ist dann von einer durchsichtigen Scheibe 84 überdeckt und über den Gehäusedeckel 82 am Steuergehäuserahmen 58 fixiert.

Das anhand der Figuren 9 und 10 erläuterte Ausführungsbeispiel hat einen Batterypack 86, der auswechselbar in das Messgehäuse 16 einsetzbar ist. Hierzu ist am Steuergehäuserahmen 58 eine Batteriezuführöffnung 88 ausgebildet, durch die hindurch das Batterypack 86 in eine Halterung 90 des Elektronikmoduls 60 einsetzbar ist. Diese Halterung 90 hat dann entsprechende Kontakte, so dass die elektronischen Bauelemente über das Batterypack 86 mit Strom versorgt sind.

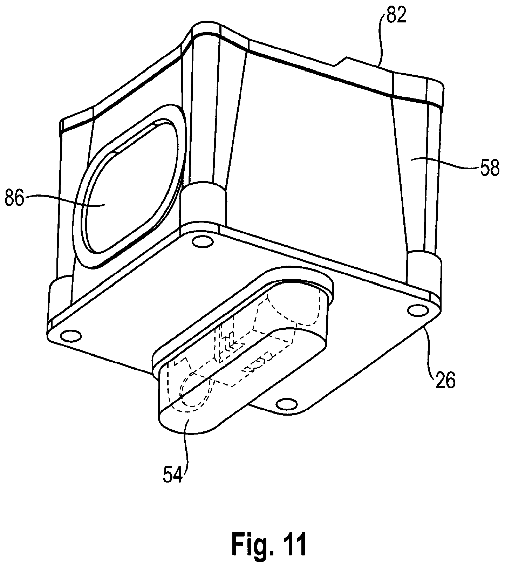

Figur 11 zeigt eine Ansicht von unten auf das Messgehäuse 16 gemäß Figur 9. In dieser Darstellung ist das Batterypack 86 in den Steuergehäuserahmen 58 und somit auch in das Elektronikmodul 60 eingesetzt. Der Messbalken 54 kragt nach unten aus dem Systemadapter 26 aus.

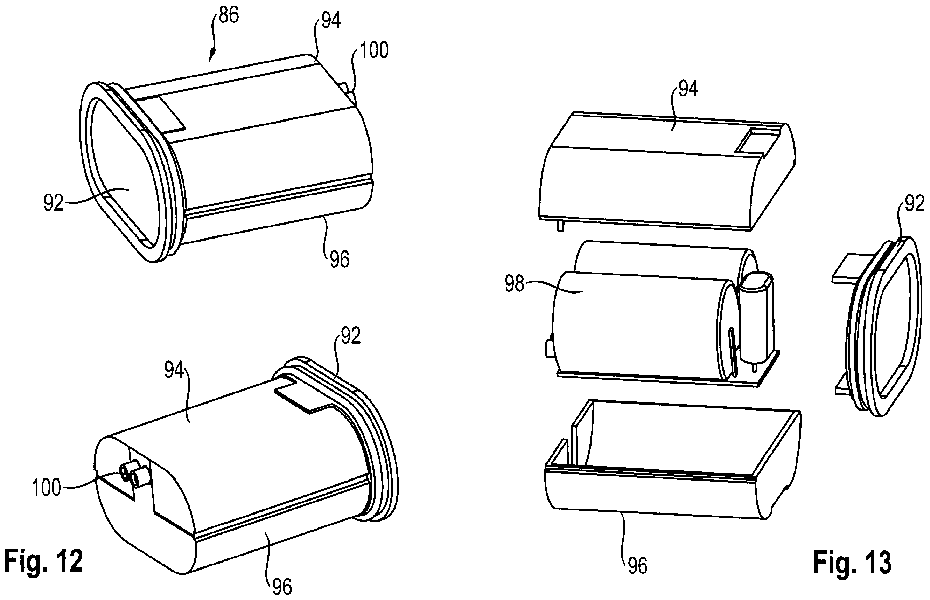

Figur 12 zeigt nochmals zwei Einzelansichten des Batterypacks 86. Dieses hat einen Deckel 92, der mit zwei in Figur 13 dargestellten Schalen 94, 96 eine Umhausung für den eigentlichen Akkublock 98 ausbildet. Aus der vom Deckel 92 entfernten Stirnfläche der Umhausung kragen dann die Kontakte 100 zur Kontaktierung mit dem Elektronikmodul 60 aus.

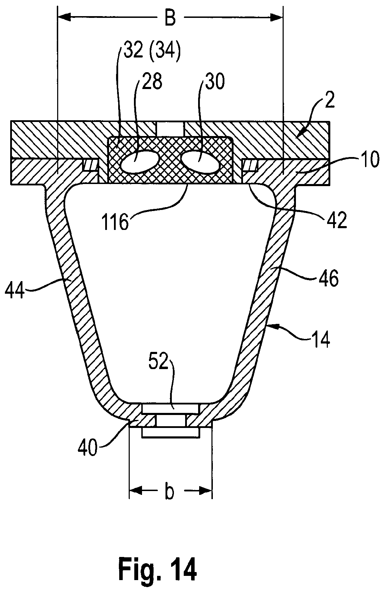

Figur 14 zeigt eine Variante der vorbeschriebenen Ausführungsbeispiele, bei der der durch das Rohrstück 8 ausgebildete Messkanal 14 nicht oval sondern im weitesten Sinn trapezförmig ausgebildet ist. Der Messkanal 14 hat dabei - ähnlich wie die zuvor beschriebenen Ausführungsbeispiele - zwei Seitenwandungen 44, 46, die sich zwischen einer sensorseitigen Querwandung 42 und einer untenliegenden Querwandung 40 erstrecken. Die beiden Seitenwandungen 44, 46 sind dabei etwa V-förmig zu einander angestellt, so dass die Breite B der Querwandung 42 deutlich größer ist als die Breite b der Querwandung 40. Durch diese in etwa trapezförmige Geometrie erfolgt wiederum in Richtung der horizontalen Querachse eine Querschnittsverengung, während in Richtung der vertikalen Hochachse ein gegenüber einem kreisförmigen Querschnitt vergrößerter Signalweg geschaffen wird.

Wie in Figur 14 dargestellt, ist im Bereich der unten liegenden, schmaleren Querwandung 40 der Reflektor 52 eingesetzt. Die oben liegende, breitere Querwandung 42 ist mit dem Flansch 10 ausgeführt, an den dann ein Messansatz 2 mit zwei Einzel- oder Doppelsensoren 28, 30 angesetzt werden kann. Dabei kann der Grundaufbau jedes der beschriebenen Messansätze oder Messeinsätze verwendet werden.

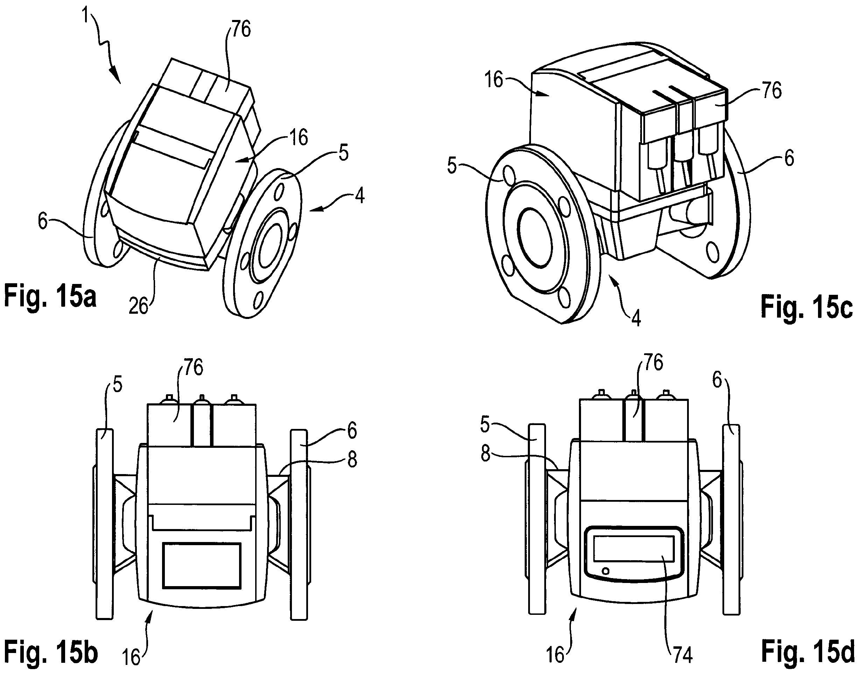

In den Figuren 15a) bis 15d) sind weitere Ausführungsbeispiele von Durchflussmessern 1 dargestellt. Die Figuren 15a), 15b) und 15c) zeigen unterschiedliche Ansichten eines Durchflussmessers 1, bei dem die Sensorik als Messansatz ausgeführt ist. Wie bei den zuvor beschriebenen Ausführungsbeispielen ist an das Gehäuse 4 mit den beiden Befestigungsflanschen 5, 6 ein Messansatz 2 mit einem Messgehäuse 16 angesetzt, an dem wiederum ein oder mehrere Kommunikationsmodule zur Signalübertragung angeordnet sind.

Figur 15d) zeigt eine Variante mit einer Digitalanzeige 74.

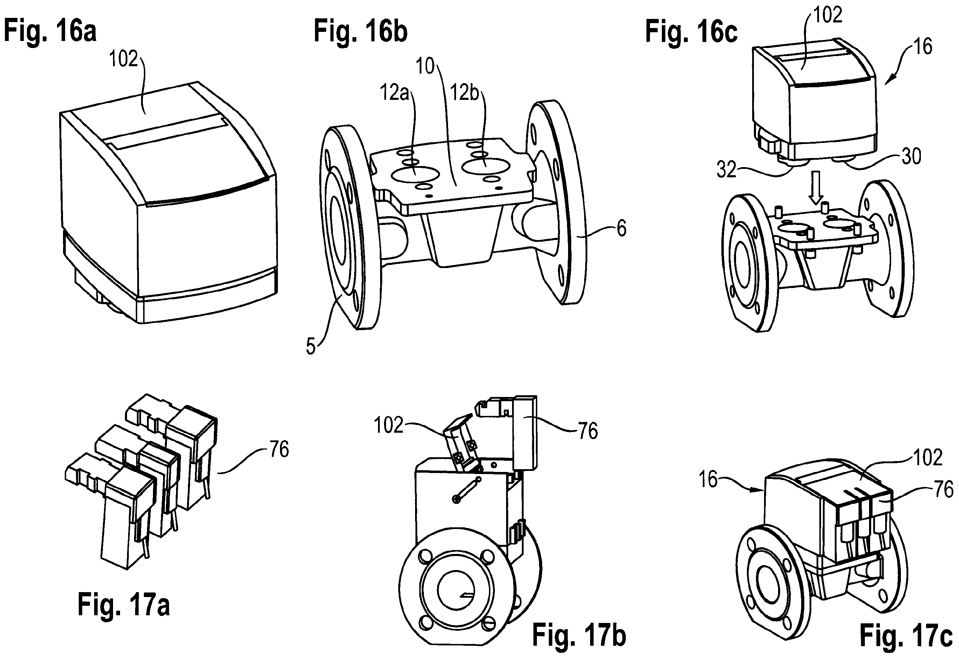

Die in Figur 15 dargestellten Ausführungsbeispiele sind im Prinzip aus zwei Hauptkomponenten, dem in Figur 16a) dargestellten Messgehäuse 16 und dem in Figur 16b) dargestellten Gehäuse 4 gebildet. Das Messgehäuse 16 ist als Messansatz ausgeführt und wird an den Flansch 10 des Gehäuses 4 angesetzt. Dieser Montagevorgang ist schematisch in Figur 16c) dargestellt. Man erkennt in dieser Darstellung die beiden Sensoren 28, 30, die in im Folgenden noch näher erläuterte Öffnungen/Ausnehmungen des Flansches 10 eingesetzt werden.

Je nach Anwendungsfall können an das Messgehäuse 16 - wie vorstehend erläutert - sonstige Module, beispielsweise die erläuterten L-förmigen Kommunikationsmodule 76 (siehe Figur 17a)) angesetzt werden. Dieses Ansetzen ist in Figur 17b) dargestellt. Beim dargestellten Ausführungsbeispiel ist das Messgehäuse 16 mit einer schwenkbaren Abdeckung 102 ausgeführt, die zum Einsetzen der Kommunikationsmodule 76 oder sonstiger Module geöffnet werden kann, so dass diese in entsprechende Schächte eingesetzt und mit dem Elektronikmodul 60 kontaktiert werden können. Nach diesem Einsetzen wird die Abdeckung 102 geschlossen (siehe Figur 17c)), so dass die Kommunikationsmodule 76 oder sonstigen Module/Komponenten lagefixiert und ggfs. kontaktiert sind.

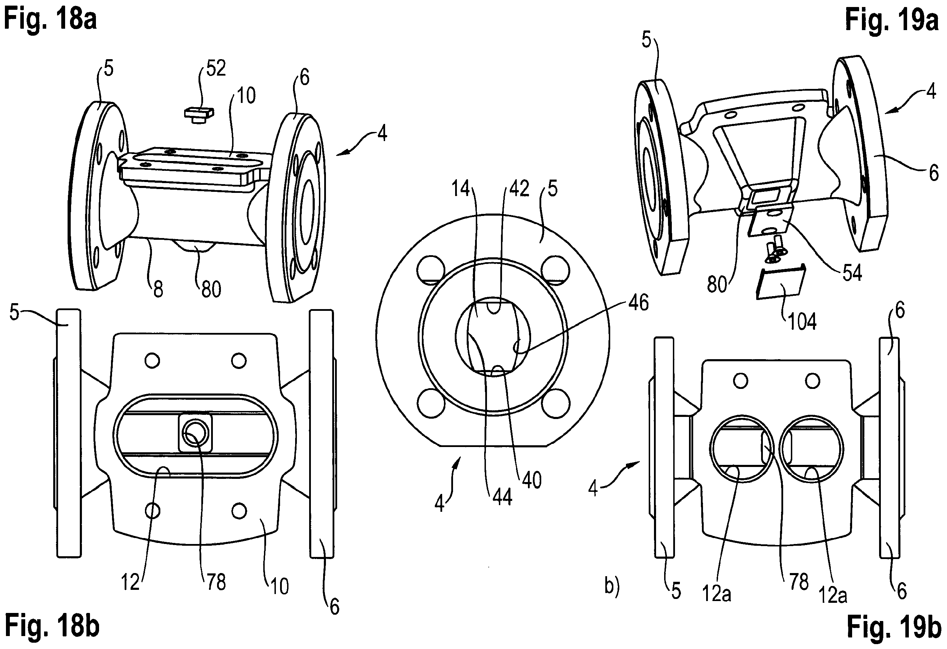

Anhand der Figuren 18 und 19 werden zwei prinzipielle Möglichkeiten der Ausgestaltung des Gehäuses 4 erläutert.

Beide Gehäusevarianten unterscheiden sich nicht in der Geometrie des Messkanals 14, der wiederum als Ovalprofil ausgeführt ist. Dieses Ovalprofil ist in der beiden Varianten (Figuren 18, 19) gemeinsamen Seitenansicht (c)) dargestellt.

Bei dem in Figur 18 dargestellten Ausführungsbeispiel des Gehäuses 4 ist der Flansch 10 mit einer einzigen Ausnehmung 12 ausgeführt, in die der Messeinsatz mit der Sensorik eingesetzt wird. Die Montage des Reflektors 52 erfolgt, wie in Figur 18a) dargestellt, durch die Ausnehmung 12 hindurch, wobei der Reflektor 52 dann - ähnlich wie beim Ausführungsbeispiel in Figur 8 - in eine Tasche 78 des Rohrstücks 8 eingesetzt wird. Diese Tasche 78 kann wiederum in einem Vorsprung 80 ausgebildet sein.

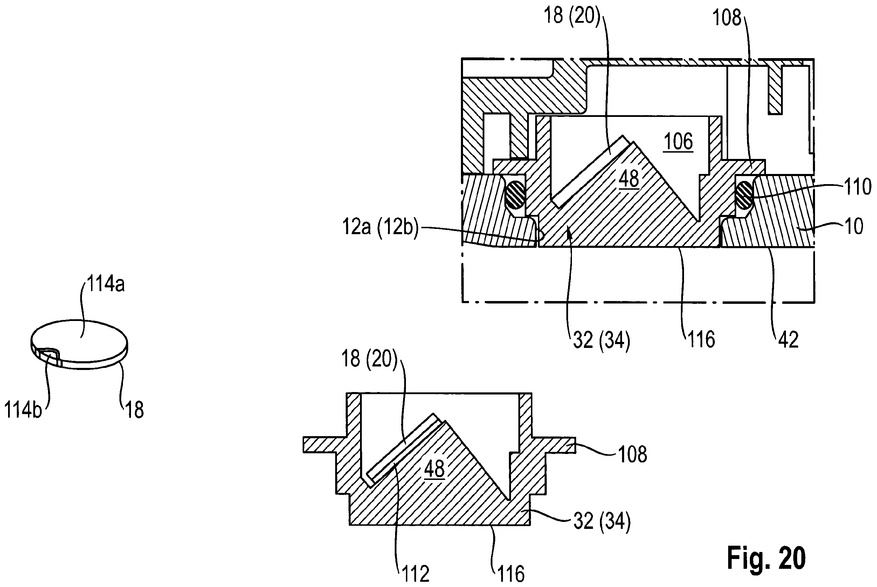

Figur 19 zeigt eine Variante, bei der nicht eine einzige Ausnehmung sondern für jeden Sensor 28, 30 eine eigene Ausnehmung 12a, 12b vorgesehen ist, in die jeweils ein Sensor 28, 30 eingesetzt ist, dessen Grundaufbau anhand Figur 20 erläutert wird. Bei diesen relativ kleinen Ausnehmungen 12a, 12b ist die Montage des Reflektors 52 durch diese Ausnehmungen hindurch schwierig. Aus diesem Grund wird es bei einem derartigen Ausführungsbeispiel bevorzugt, den Vorsprung 80 mit der Tasche 78 nach außen hin offen auszugestalten, so dass der Reflektor 52 von außen her in die Tasche 78 eingesetzt werden kann. Die Abdichtung erfolgt dann mittels einer Dichthaube 104.

Wie bei den zuvor beschriebenen Ausführungsbeispielen erfolgt die Ein- und Auskopplung der Messsignale über eine oben liegende, vorzugsweise plane oder gering gewölbte Querwandung 42, wobei die Sensoren bündig in die Wandung eingesetzt sind. In entsprechender Weise ist der Reflektor 52 in die gegenüber liegende, von den Sensoren beabstandete Querwandung 40 eingesetzt.

Figur 20 zeigt den Grundaufbau der Sensoren 18, 20, wie er bei den zuvor beschriebenen Ausführungsbeispielen verwendbar ist. Dabei ist jeder Sensor 18, 20 in einem Koppelstück 32, 34 gehalten. Wie zuvor anhand des Messbalkens 54 erläutert, hat jedes Koppelstück 32 einen Koppelkeil 48, an dessen schräg angestellter Keilfläche der jeweilige Sensor 18 anliegt.

Das Koppelstück 32 und der Koppelkeil 48 werden - wie der Messbalken 54 - aus einem geeigneten Kunststoff, beispielsweise PEEK, PSU oder PEI ausgebildet. Selbstverständlich sind auch andere Materialien verwendbar, die die folgenden Kriterien erfüllen: das Material soll eine Signalübertragung mit einer stabilen Schallgeschwindigkeit im Bereich von 2000 bis 2400 m/s ermöglichen, der Temperatureinfluss soll dabei möglichst gering oder zumindest linear sein, das Material soll einen geringen Längenausdehnungskoeffizienten aufweisen, das Material soll eine ausreichend gute Kleb- und Vergusseigenschaft aufweisen und soll des Weiteren eine geringe Wasseraufnahme oder eine geringe Änderung der relevanten Eigenschaften durch die Wasseraufnahme aufweisen. Zudem soll das Material zur Nutzung in Trinkwasserbereichen geeignet und vergleichsweise preiswert sein.

Bei dem dargestellten Ausführungsbeispiel ist das Koppelstück 32 in etwa topfförmig ausgebildet, wobei ein Aufnahmeraum 106 mit einer Vergussmasse oder dergleichen verfüllt wird. Am Außenumfang des Koppelstücks 32 ist ein Ringflansch 108 vorgesehen, der im montierten Zustand einen O-Ring 110 überstreckt, so dass das Koppelstück 32 dichtend in eine Aufnahme im Gehäuse 4 oder im Messgehäuse 16 einsetzbar ist. Die akustische und mechanische Kopplung des Sensors 18 an den Koppelkeil 48 erfolgt über ein Fett, Gel, ein Silikonpad und/oder Klebstoff. Diese Schicht ist in Figur 20 mit dem Bezugszeichen 112 gekennzeichnet. Die Kontaktierung des Sensors, d.h. beispielsweise der Piezokeramik, erfolgt über zwei Elektroden 114a, 114b, wobei die unten liegende, koppelkeilseitige Elektrode 114b einseitig nach oben zur anderen Elektrode 114a hin geführt ist, so dass die Kontaktierung von oben her vereinfacht ist.

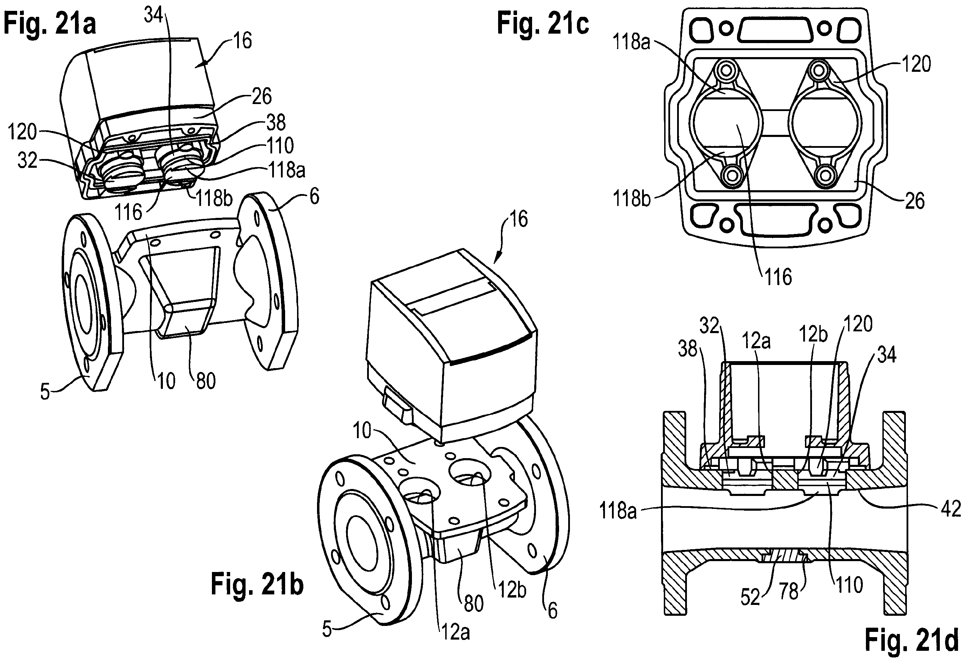

Anhand der Figur 21 wird der Aufbau eines Messansatzes 2 für ein Gehäuse gemäß Figur 19 erläutert. Wie vorstehend beschrieben, hat dieses Ausführungsbeispiel eines Gehäuses 4 zwei individuelle Ausnehmungen 12a, 12b (siehe Fig. 21d)), in die jeweils ein Sensor 28, 30 mit dem zugehörigen Koppelstück 32, 34 dichtend eingesetzt wird. Wie in Figur 21d) dargestellt, sind dabei die beiden Koppelstücke 32, 34 mit den darin integrierten, nicht dargestellten Sensoren 28, 30 sowie den beiden O-Ringen 110 individuell in die jeweiligen Ausnehmungen 12a, 12b eingesetzt und dort über die O-Ringe 110 abgedichtet. Das Messgehäuse 16 wird dann auf den Flansch 10 aufgesetzt, wobei der Dichtring 38 zwischen dem Systemadapter 26 des Messgehäuses 16 und dem Flansch 10 angeordnet ist und dabei die beiden Sensoren 28, 30 mit den Koppelstücken 32, 34 umgreift, so dass auch das Elektronikmodul 60 zu dem Fluid hin abgedichtet ist. Wie beispielsweise in Figur 20b) dargestellt, schließt das Koppelstück 32 bündig mit der Querwandung 42 das Messkanals 14 ab. Bei dem anhand Figur 21 erläuterten Ausführungsbeispiel ist diese Querwandung im Prinzip durch den Flansch 10 des Gehäuses 4 ausgebildet. Bei geringen Nennweiten kann es vorkommen, dass das Koppelstück 32, 34 einen etwas größeren Durchmesser als die Breite der Querwandung 42 hat, so dass sich die Randbereiche des Koppelstückes 32, 34 bis in die Seitenwandungen 44, 46 hinein erstrecken. Bei einer derartigen Geometrie kann es vorteilhaft sein, wenn - wie beim Ausführungsbeispiel gemäß Figur 21a), 21c), 21d) - die im Übergangsbereich zu den Seitenwandungen 44, 46 ausgebildeten Bereiche einer Koppelfläche 116 mit sich zu den Seitenwandungen 44, 46 hin erstreckenden Vorsprüngen 118a, 118b (siehe Figur 21c)) ausgebildet ist, wobei diese Vorsprünge 118a, 118b bündig in die Seitenwandungen 44, 46 einlaufen, so dass die beiden Koppelstücke 32, 34 passgenau, ohne Über- oder Unterstand in den Umfangswandungen des Messkanals 14 aufgenommen sind.

Die Lagefixierung der Koppelstücke 32, 34 in dem Messgehäuse 16 erfolgt bei dem in den Figuren 21 dargestellten Ausführungsbeispiel über Fixierelemente 120 (siehe Figur 21c, 21a)), die einerseits die Koppelstücke 32 oder 34 umgreifen und andererseits am Systemadapter 26 befestigt sind. Wie vorstehend erläutert, erfolgt bei diesem Ausführungsbeispiel die Montage des Reflektors 52 von außen her, wobei dieser in die nach außen hin offene Tasche 78 des Gehäuses 4 eingesetzt wird.

Ein Nachteil der direkten Festlegung der Sensoren 28, 30 und Koppelstücke 32, 34 im Gehäuse 4 ist, dass letzteres einen vergleichsweise komplexen Aufbau hat und somit relativ hohe Anforderungen an die Fertigung, insbesondere das Gießen stellt.

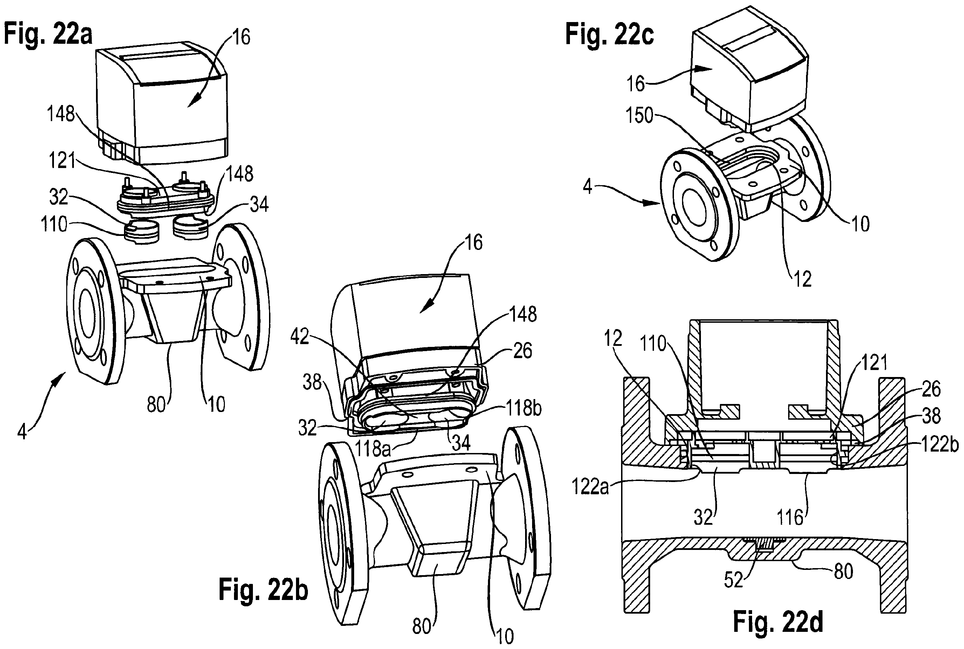

Beim Ausführungsbeispiel gemäß Figur 22 wird ein einfach herzustellendes Gehäuse gemäß Figur 18 verwendet, bei dem die Sensorik in eine einzige große Ausnehmung 12 des Flansches 10 eingesetzt wird. Bei dem in Figur 22 dargestellten Ausführungsbeispiel hat das Messgehäuse 16 eine plattenförmige, bspw. aus Kunststoff hergestellte Sensoraufnahme 121, die einerseits mit dem Systemadapter 26 verbunden ist und die andererseits zwei Ausnehmungen 122a, 122b (siehe Figur 22d)) hat, in die jeweils ein Koppelstück 32, 34 dichtend eingesetzt wird. Diese Abdichtung erfolgt dabei wiederum mittels der O-Ringe 110. Wie insbesondere in Figur 22b) dargestellt, schließen die Koppelstücke 32, 34 im montierten Zustand bündig mit der messkanalseitigen Fläche der Sensoraufnahme 121 ab. Diese Fläche bildet somit einen Teil der Querwandung 42 des Messkanals 14 aus - aus diesem Grund wird diese Fläche in Figur 22b) auch mit dem Bezugszeichen 42 versehen. Beim Montieren taucht die Sensoraufnahme 121 in die Ausnehmung 12 des Flansches 10 ein und ist dort mittels einer zusätzlichen ringförmigen Dichtung 148 abgedichtet, die auf einer Schulter 150 des Flansches 10 aufliegt. Auch bei diesem Ausführungsbeispiel sind die Koppelstücke 32, 34 und auch die Sensoraufnahme 121 mit in Richtung zu den Seitenwandungen 44, 46 hin auskragenden Vorsprüngen 118 ausgebildet, die einen kontinuierlichen Übergang zur jeweils benachbarten Seitenwandung 44, 46 gewährleisten. Wie erwähnt, sind diese Vorsprünge 118 bei größeren Nennweiten nicht erforderlich, da dann die Koppelstücke 32, 34 vollflächig in die Querwandung 42 eingesetzt werden können.

Die Abdichtung der Sensoraufnahme 121 und des Systemadapters gegenüber dem Flansch 10 erfolgt über den umlaufenden Dichtring 38. Dementsprechend sind bei der Lösung gemäß Figur 22 vier Dichtungen (zwei O-Ringe 110, der Dichtring 38 und die Dichtung 148) erforderlich.

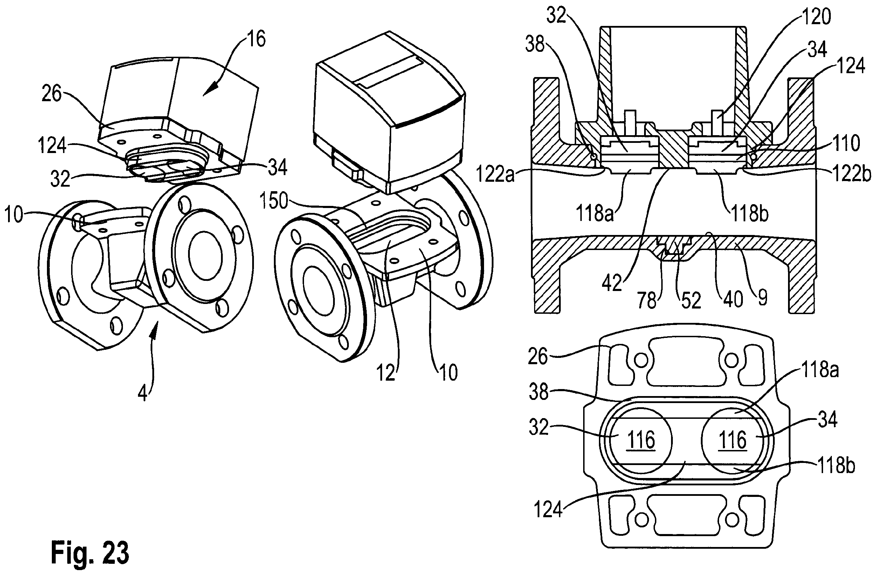

Der vorrichtungstechnische Aufwand lässt sich weiter verringern, wenn - wie in Figur 23 dargestellt - die beiden Koppelstücke 32, 34 in eine Sensorplatte 124 des Messgehäuses 16 eingesetzt sind, die entweder am Systemadapter 26 ausgebildet ist oder an diesen angesetzt ist. D.h. die Funktion der in Figur 22 erläuterten Sensoraufnahme 121 ist in das Messgehäuse 16 integriert.

Die Sensorplatte 124 hat gemäß der Darstellung in Figur 23d) Aufnahmen 122a, 122b, in die die beiden Koppelstücke 32, 34 dichtend eingesetzt sind. Die Abdichtung erfolgt mittels der O-Ringe 110. Die Lagefixierung der Koppelstücke 32, 34 erfolgt dann wiederum über Fixierelemente 120, die die Sensorik im Messgehäuse 16 halten.

Bei diesem Ausführungsbeispiel ist somit zumindest ein Teil der sensorseitigen Querwandung 42 durch die Sensorplatte 124 ausgebildet. Bei geringen Nennweiten können wieder die beiden Vorsprünge 118 am Koppelstück 32, 34 und fluchtend dazu an der Sensorplatte 124 (siehe Fig. 23a), 23c)) ausgebildet werden, so dass ein kontinuierlicher Übergang zur benachbarten Seitenwandung 44, 46 gewährleistet ist. Das Messgehäuse 16 mit der Sensorplatte 124 ist dann wiederum mittels des umlaufenden Dichtrings 38 (Figur 23c)) mit Bezug zum Gehäuse 4 abgedichtet. Hierzu taucht die Sensorplatte 124 in die Ausnehmung 12 des Flansches 10 ein.

Bei dem in Figur 21 gezeigten Ausführungsbeispiel sind somit lediglich drei Dichtungen (zwei O-Ringe 110 und der Dichtring 38) erforderlich.

Aufgrund der vergleichsweise großen Ausnehmung 12 kann bei diesem Ausführungsbeispiel ebenfalls der Reflektor 52 durch die Ausnehmung 12 hindurch in die Tasche 78 des Rohrstücks 8 eingesetzt werden, wobei auch der Reflektor 52 bündig und fluchtend in die unten liegende Querwandung 40 eingesetzt ist.

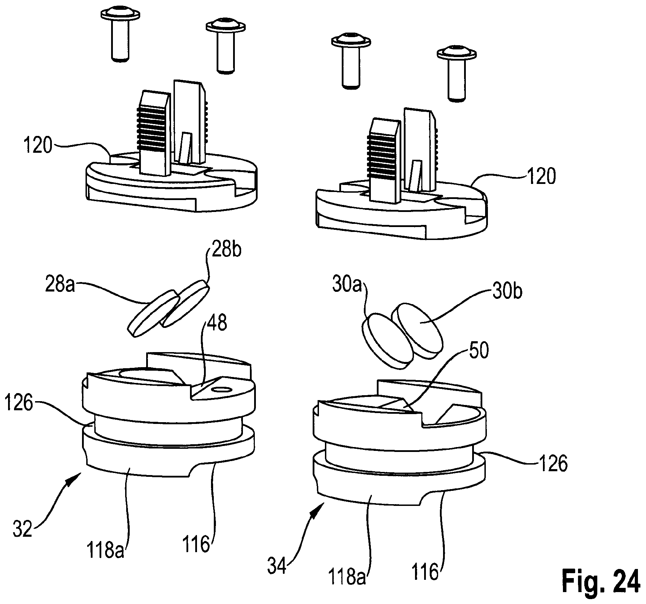

Bei den zuvor beschriebenen Ausführungsbeispielen ist in jedem Koppelstück 32, 34 ein einziger Sensor 28, 30 angeordnet. Figur 24 zeigt ein Ausführungsbeispiel, bei dem in den beiden Koppelstücken 32, 34 jeweils zwei Sensoren 28a, 28b; 30a, 30b angeordnet sind. Diese Sensoren 28, 30 liegen dabei an Koppelkeilen 48, 50 des jeweiligen Koppelstücks 32, 34 an. Die Befestigung im Messgehäuse 16 erfolgt wiederum über Befestigungsmittel, beispielsweise Schrauben und/oder Fixierelemente 120. Wie eingangs erläutert, können auch mehr als zwei Sensoren 28, 30 in jeweils ein Koppelstück integriert sein. In der Darstellung gemäß Figur 24 sieht man einen der beiden Vorsprünge 118a, die bündig in die Seitenwandungen 44, 46 einlaufen. In der Darstellung gemäß Figur 24 ist auch eine umlaufende Ringnut 126 zur Aufnahme eines O-Ringes 110 sichtbar.

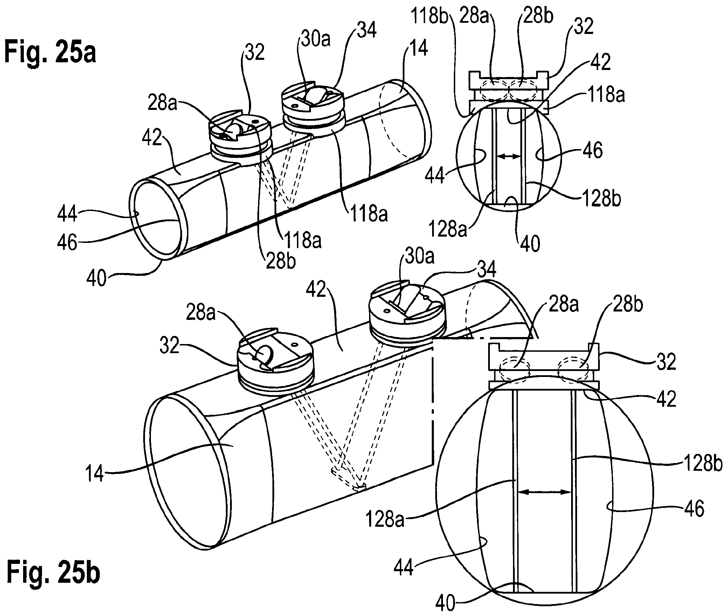

Ein derartiger Doppelsensor hat den Vorteil, dass zwei parallele Signalpfade ausgebildet werden können, wie sie beispielsweise in Figur 25 dargestellt sind. Oben liegend ist ein Ausführungsbeispiel eines Durchflussmessers 1 mit einer vergleichsweise geringen Nennweite von DN50 dargestellt. Der angedeutete Messkanal hat beispielsweise eine oben liegende Querwandung 42, in die bündig die beiden Doppelsensoren, d.h. die beiden Koppelstücke 32, 34 mit den jeweiligen Sensoren 28a, 28b bzw. 30a, 30b eingesetzt sind. Die Koppelstücke 32, 34 verlaufen mit Ihren Koppelflächen 116 bündig zu den Querwandungen 42, wobei aufgrund der geringen Nennweite im Übergangsbereich zu den Seitenwandungen 44, 46 die Koppelstücke 32, 34 jeweils mit den genannten Vorsprüngen 118a, 118b ausgeführt sind, die bündig in die Seitenwandungen 44, 46 einlaufen.

Wie eingangs erläutert, wird ein derartiger Doppelsensor, vorzugsweise bei geringeren Nennweiten, mit einem beiden Sensoren 28, 30 gemeinsamen Koppelstück 32 (34) eingesetzt. Bei größeren Nennweiten werden vorzugsweise anstelle eines Doppelsensors zwei parallele Einzelsensoren verwendet, so dass anstelle zweiter Doppelsensoren vier Einzelsensoren am Messansatz / Messeinsatz gehalten werden.

Mit derartigen Doppelsensoren oder paarweise angeordneten Einzelsensoren erfolgt die Messung entlang von zwei parallelen Signalpfaden 128a, 128b, die bei kleinen Nennweiten (siehe Figur 25a)) in einem vergleichsweise geringeren Abstand als bei großen Nennweiten (siehe Figur 25b)) verlaufen. Bei derartigen großen Nennweiten ist die sensorseitige Querwandung 42 so breit ausgeführt, dass diese Breite größer als der Durchmesser der Koppelstücke 32, 34 ist, so dass auf die Ausbildung der Vorsprünge 118 verzichtet werden kann und somit die Koppelfläche 116 plan oder entsprechend der leichten Wölbung der Querfläche 42 ausgebildet ist.

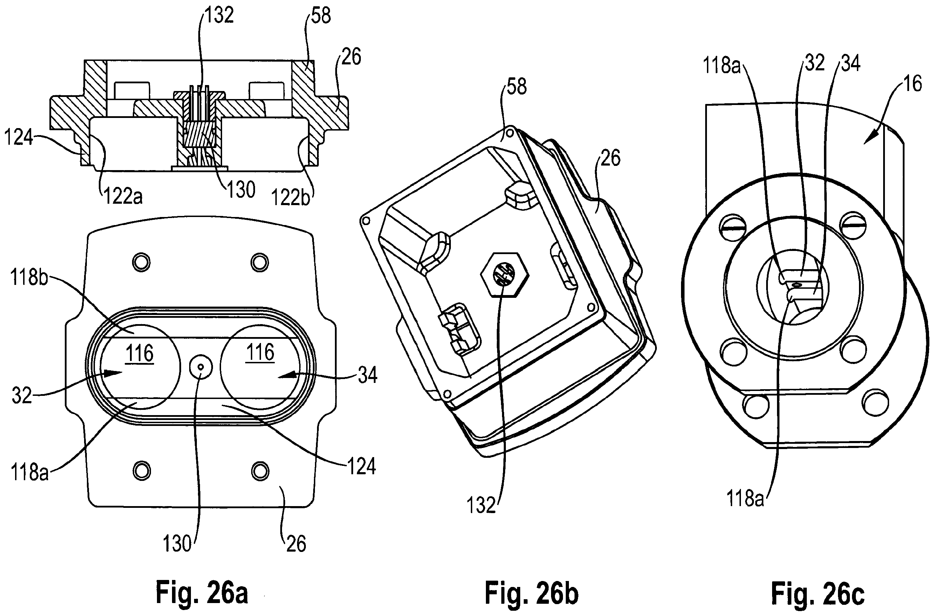

Figur 26 zeigt eine Designvariante, bei der zusätzlich zu den beiden Sensoren 28, 30 mit den zugehörigen Koppelstücken 32, 34 ein weiterer Sensor, beispielsweise ein Drucksensor 130 vorgesehen ist. Das in Figur 26 dargestellte Ausführungsbeispiel hat den prinzipiellen Aufbau des Ausführungsbeispiels gemäß Figur 23, bei dem die beiden Sensoren in das Messgehäuse integriert sind. Dabei sind die beiden Koppelstücke 32, 34 gemäß Figur 26d) in die Aufnahmen 122a, 122b der messeinsatzseitigen Sensorplatte 124 eingesetzt. Der Drucksensor 130 ist bei dem dargestellten Ausführungsbeispiel dann im Bereich zwischen den beiden Aufnahmen 122a, 122b bzw. den darin eingesetzten Koppelstücken 32, 34 angeordnet. Die Kontaktierung erfolgt über Kontakte 132, die durch die Sensorplatte 124 und den Systemadapter 26 hindurch in den vom Steuergehäuserahmen 58 umgriffenen Raum hineinragen und dort mit dem Elektronikmodul 60 kontaktiert sind (siehe Figuren 26b) und 26d)).

In der Darstellung gemäß Figur 26c) sieht man recht deutlich die bündige Einbettung der Koppelstücke 32, 34 in den Messkanal 14. Dabei sind links die beiden Vorsprünge 118 sichtbar, die bündig in die Seitenwandungen 44, 46 einlaufen.

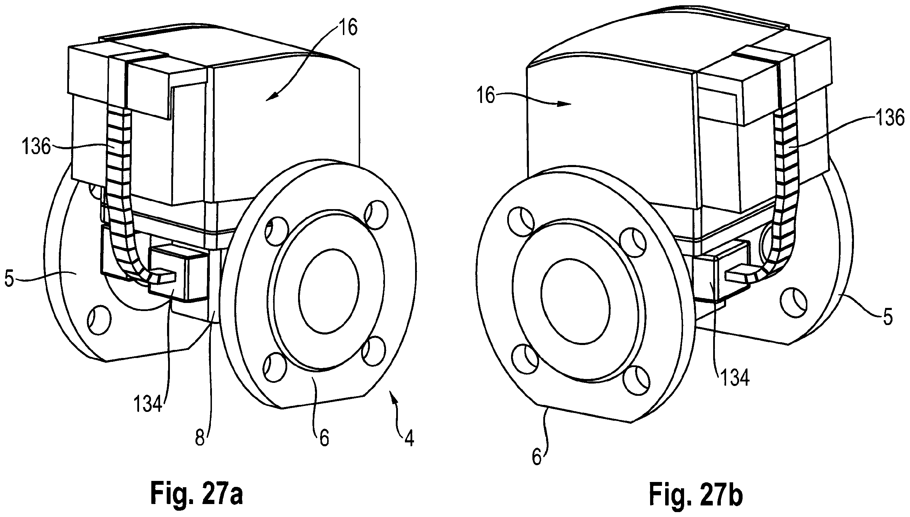

Beim zuvor beschriebenen Ausführungsbeispiel ist somit der Drucksensor 130 in das Steuergehäuse integriert. Figur 27 zeigt ein Ausführungsbeispiel, bei dem ein Drucksensormodul 134 seitlich, d.h. etwa im Mittelbereich der Seitenwandungen an das Rohrstück 8 angesetzt wird. Die Signalübertragung und Stromversorgung erfolgt dann über eine flexible Leitung (Energie-/Signalübertragungskette) 136, die mit dem Elektronikmodul 60 oder dem Batterypack 86 des Messgehäuses 16 kontaktiert ist. Dabei kann diese Anbindung der Leitung 136 in etwa in der gleichen Weise erfolgen, wie sie für die Kommunikationsmodule vorgesehen ist (siehe Figur 17b)).

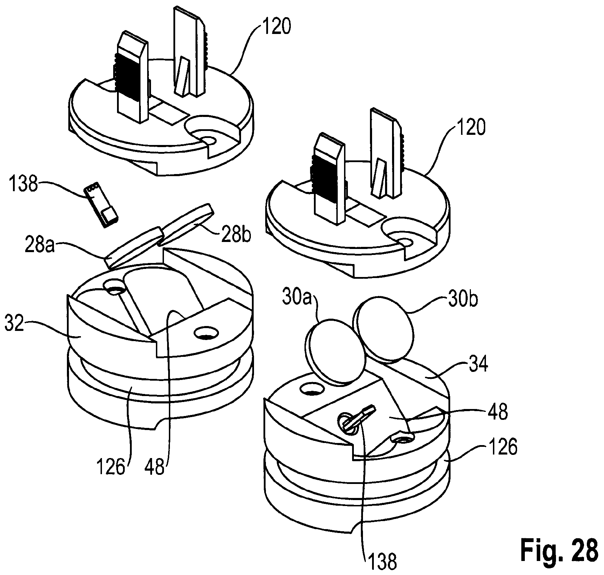

Figur 28 zeigt eine Variante der Doppelsensoren gemäß Figur 24. Der Grundaufbau entspricht demjenigen aus Figur 24, so dass diesbezügliche Erläuterungen entbehrlich sind. Zusätzlich zu den beiden Doppelsensoren sind beim Ausführungsbeispiel gemäß Figur 28 in den jeweiligen Koppelstücken 32, 34 jeweils Temperatursensoren 138 aufgenommen, über die die Temperatur der Sensoren 28, 30 und/oder der Koppelstücke 32, 34 erfassbar ist und bei einer Temperaturänderung entsprechende Signalkorrekturen vorgenommen werden können. Diese Temperatursensoren 138 können beispielsweise in geeignete Ausnehmungen/Taschen im Bereich des Koppelkeils 48 eingesetzt werden.

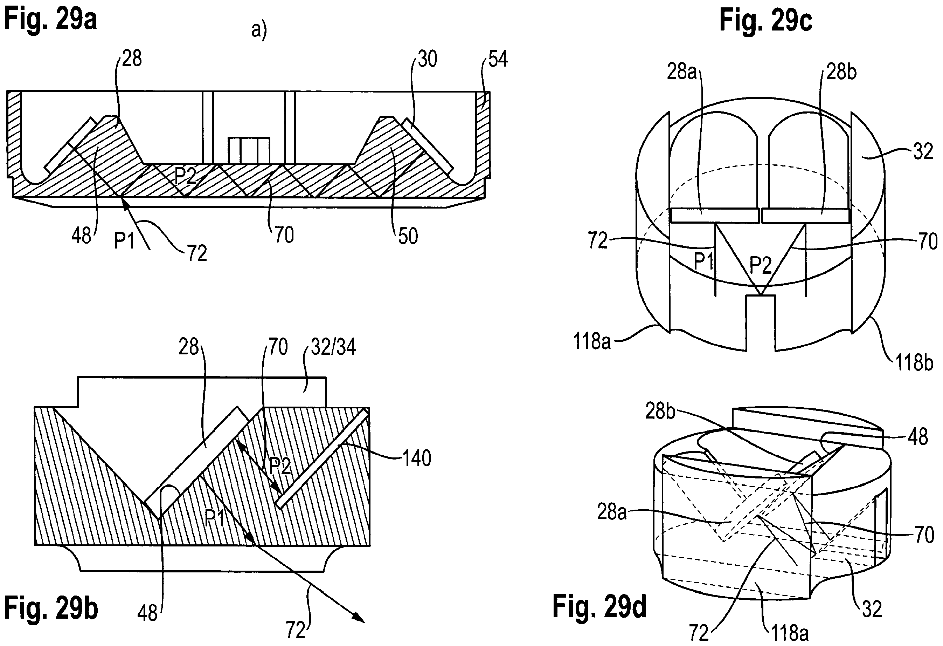

Anhand Figur 29 sind nochmals Möglichkeiten zur Ausbildung eines Referenzpfades erläutert.

Figur 29a) zeigt den bereits beschriebenen Referenzpfad 70 (P2) im Messbalken 54, der sich von dem einen Sensor 28 zickzackförmig zum anderen Sensor 30 erstreckt. Der eigentliche Signalpfad 72 (P1) tritt nach einem vergleichsweise kurzen Weg aus dem Messbalken 54 aus, wobei dies über die bündig zum Messkanal 14 ausgebildete Koppelfläche 116 erfolgt.

Figur 29b) zeigt eine Möglichkeit, einen derartigen Referenzpfad P2 auch in einem Koppelstück 32 auszubilden. In diesem Fall wird beispielsweise parallel zum Sensor 28, der am Koppelkeil 48 abgestützt ist, ein Spiegel 140 im Koppelstück 32 angeordnet. Über diesen Spiegel 140 wird dann das Messsignal reflektiert und zurück zum Sensor 28 umgelenkt, der dann das gesendete Signal wieder empfängt und somit eine Korrektur ermöglicht. Der Messstrahl P1 tritt in an sich bekannter Weise über die Koppelfläche 116 in den Messkanal ein.

Bei einem Doppelsensor gemäß Figur 29c) ist das Koppelstück 32 so ausgebildet, dass beispielsweise ein Teil der vom Sensor 28a gesendeten Signale im Koppelstück 32 reflektiert und zum parallel angeordneten Sensor 28b umgelenkt werden, so dass dieser Sensor 28b das Signal des Sensors 28a empfängt - es wird wiederum ein Referenzpfad P2 gebildet, der sich zwischen den beiden Sensoren 28a, 28b erstreckt. Der überwiegende Anteil der Signale wird in an sich bekannter Weise über das Koppelstück 32 und die Koppelfläche 116 in den Messkanal bzw. das dort strömende Fluid eingekoppelt. In der Darstellung gemäß Figur 29 sind wiederum die bei kleiner Nennweite vorteilhaften Vorsprünge 118a, 118b angedeutet.

Bei den vorbeschriebenen Ausführungsbeispielen ist der Ovalquerschnitt des Messkanals 14 mit seiner Hochachse entweder in Vertikalrichtung (das heißt in Schwerkraftrichtung) oder schräg dazu angeordnet. Prinzipiell kann diese "Hochachse" auch waagrecht, das heißt, quer zur Vertikalen angeordnet sein.

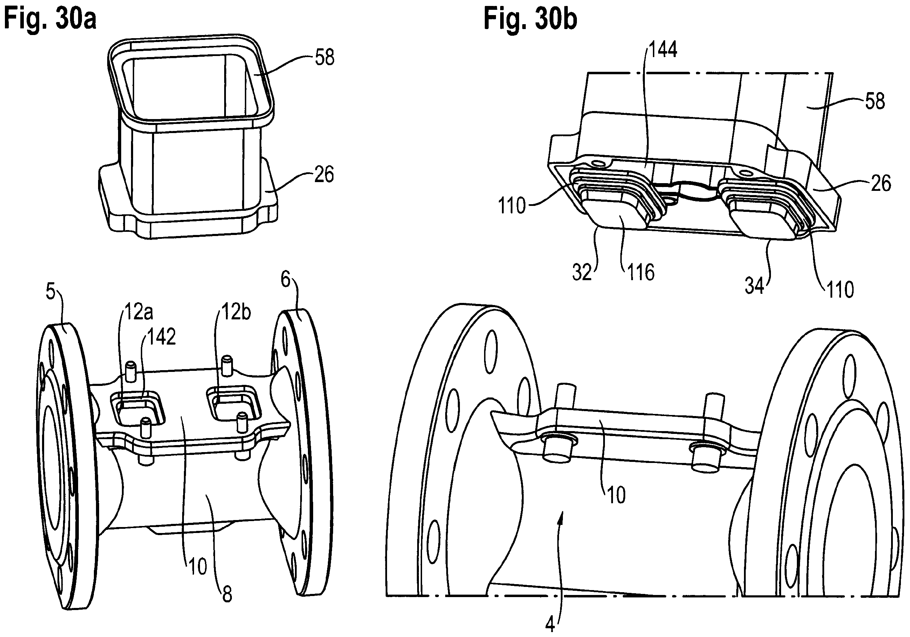

Figur 30 zeigt einen Durchflussmesser 1 mit einem Doppelsensor, wie er anhand der Figuren 24, 25, 28 und 29c) erläutert wurde.

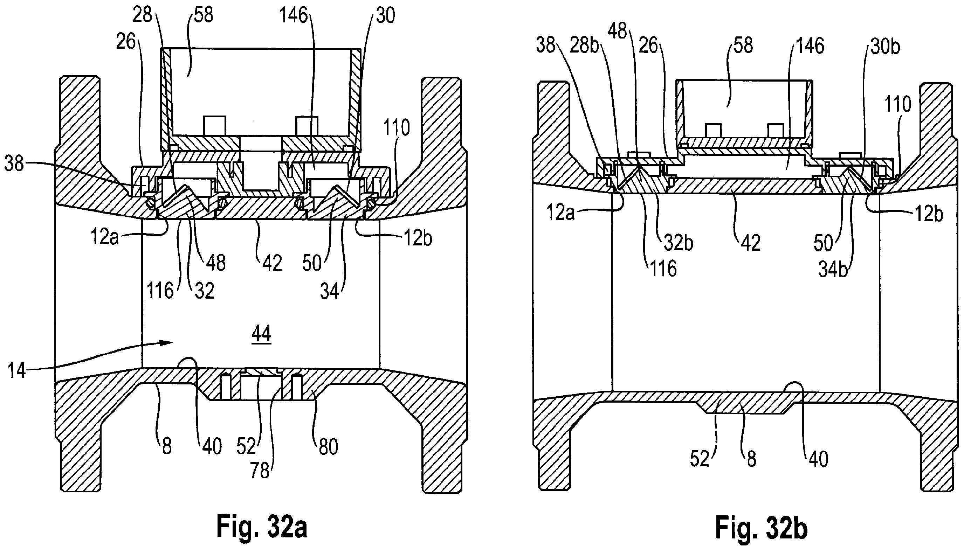

Wie in Figur 30a) dargestellt, ist das Gehäuse 4 im Prinzip wie bei den vorbeschriebenen Ausführungsbeispielen ausgebildet. Dementsprechend hat das Gehäuse einen am Rohrstück 8 ausgebildeten Flansch 10, an dem die beiden Ausnehmungen 12a, 12b für die Koppelstücke 32, 34 (siehe Figur 30b)) ausgebildet sind. Im Unterschied zu den vorbeschriebenen Ausführungsbeispielen sind die die Koppelstücke 32, 34 beziehungsweise deren die Koppelfläche 116 ausbildende, in die Ausnehmungen 12a, 12b einkragenden Endabschnitte in etwa rechteckförmig mit verrundeten "Eckbereichen" ausgebildet. Dementsprechend sind auch die Ausnehmungen 12a, 12b rechteckförmig mit verrundeten Übergängen zwischen der kürzeren und der längeren Umfangskante ausgebildet. Wie der Abbildung in Figur 30a) weiter entnehmbar ist, hat jede Ausnehmung 12a, 12b eine Schulter 142, auf der im montierten Zustand der jeweilige O-Ring 110 des Sensors 28, 30 dichtend aufliegt. Bei dem dargestellten Ausführungsbeispiel sind die beiden als Doppelsensor ausgeführten Sensoren 28, 30 in den Systemadapter 26 eingesetzt. Dieser ist beispielsweise topfförmig (siehe Figur 32) mit entsprechenden Aufnahmen 144 für die Sensoren 28, 30 ausgebildet. Nach dem Einsetzen dieser Sensoren 28, 30 in die Aufnahmen 144 des Systemadapters 26 kann der Innenraum mit einer Vergussmasse verfüllt werden, so dass die Sensoren 28, 30 zuverlässig und dichtend aufgenommen sind. Der Systemadapter 26 trägt dann in der vorbeschriebenen Weise den Steuergehäuserahmen 58, der das nicht dargestellte Elektronikmodul 60 und dergleichen aufnimmt.

Bei dem in Figur 30 dargestellten Ausführungsbeispiel ist somit ein Systemadapter 26 beiden Sensoren 28, 30 zugeordnet. Prinzipiell ist es auch möglich, die beiden Sensoren 28,30 in jeweils einem Systemadapter aufzunehmen. Der Systemadapter 26 wird auch Sensorplatte genannt. Eine derartige Lösung mit Doppelsensoren kommt - wie eingangs erwähnt - insbesondere bei Durchflussmessern 1 mit geringer Nennweite zum Einsatz.

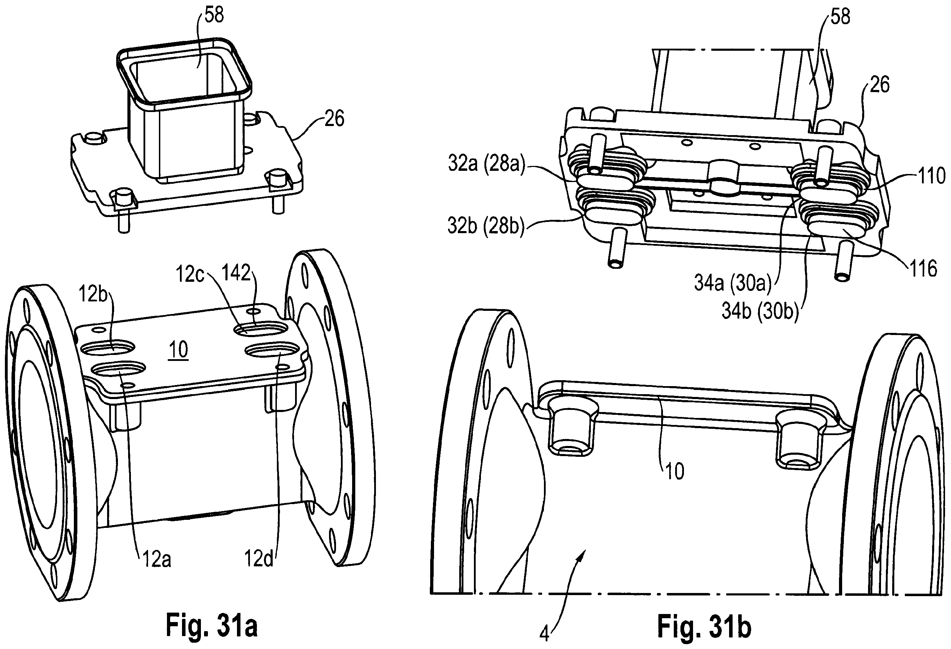

Bei größeren Nennweiten wird eine Lösung bevorzugt, wie Sie in Figur 31 dargestellt ist. Bei einer derartigen Ausführung werden gemäß Figur 31b) anstelle der beiden Doppelsensoren vier Einzelsensoren 28a, 28b, 30a, 30b mit jeweils einem Koppelstück 32a, 32b, 34a, 34b verwendet, denen dann entsprechend im Flansch 10 des Gehäuses 4 vier Ausnehmungen 12a, 12b, 12c, 12d zugeordnet sind. Der prinzipielle Aufbau dieser Lösung mit vier Einzelsensoren entspricht demjenigen des Ausführungsbeispiel gemäß Figur 30. Dabei sind allerdings die Einzelsensoren 28a, 28b, 30a, 30b nicht rechteckförmig sondern oval, das heißt, mit verrundeten Scheitelkanten und etwas längeren Längskanten ausgeführt, die gemeinsam eine etwa ovale Koppelfläche 116 bilden. Dementsprechend sind die Ausnehmungen 12a, 12b, 12c, 12d ebenfalls ovalförmig ausgebildet. Die O-Ringe 110 liegen auch bei diesem Ausführungsbeispiel auf Schultern 142 der jeweiligen Ausnehmung 12a, 12b, 12c, 12d auf. Dementsprechende Schultern für die Dichtungen sind im Prinzip bei allen vorbeschriebenen Ausführungsbeispielen realisiert.

Zur Abdichtung zwischen dem Flansch 10 und dem Systemadapter ist wiederum ein nicht dargestellter Dichtring 38 vorgesehen.

Wie bei den zuvor beschriebenen Ausführungsbeispielen sind die dargestellten Einzel- und Doppelsensoren jeweils in Koppelstücke 32, 34 eingesetzt, wobei die jeweiligen Piezokeramiken auf jeweils einen Koppelkeil 50 des Koppelstücks 30, 32 aufsitzen. Da diese Elemente vorstehend bereits detailliert beschrieben sind, wird zur Vermeidung von Wiederholungen diesbezüglich auf diese Ausführung verwiesen.

Wie vorstehend ausgeführt, kann bei den größeren Nennweiten der Abstand zwischen den jeweils nebeneinander liegenden Einzelsensoren 28a, 28b bzw. 30a, 30b - wie in Figur 25b) dargestellt größer als beim Ausführungsbeispiel gemäß Figur 30 gewählt werden, so dass die Signalpfade in einem größeren Parallelabstand verlaufen. Beim dargestellten Ausführungsbeispiel sind wiederum alle vier Sensoren 28a, 28b, 30a, 30b in einem gemeinsamen Systemadapter 26 aufgenommen und vorzugsweise mittels einer Vergussmasse 146 lagefixiert.

In Figur 32 sind die beiden Konzepte im Längsschnitt nebeneinanderliegend angeordnet. Figur 32a) zeigt dabei den Längsschnitt des Ausführungsbeispiels gemäß Figur 30. Man erkennt in dieser Darstellung die beiden Koppelstücke 32, 34, auf deren Keilflächen 48, 50 jeweils zwei Sensoren 28 bzw. 30 (jeweils nur einer sichtbar in Figur 32a)) angeordnet sind. Diese sind jeweils in die Ausnehmungen 12a, 12b eingesetzt und dort über die O-Ringe 110 abgedichtet. Die Koppelflächen 116 verlaufen bündig zur Umfangswandung (Querwandung 42 und angrenzende Bereiche der Seitenwandungen 44, 46) des Messkanals 14, der bei diesem Ausführungsbeispiel durch das Rohrstück 8 ausgebildet ist. Ein Teil des Flansches 10 bildet somit die Querwandung 42 aus. Die gegenüberliegende Querwandung 40 ist bei diesem Ausführungsbeispiel mit der nach außen hin offenen Tasche 78 ausgebildet, in die der Reflektor 52 eingepresst ist.

In dieser Darstellung sieht man die Vergussmasse 146, mit der die beiden Koppelstücke 32, 34 mit den Sensoren 28, 30 in dem topfförmigen Systemadapter 26 lagefixiert sind.

Figur 32b) zeigt einen entsprechenden Schnitt des Durchflussmessers gemäß Figur 31. Gemäß den diesbezüglichen Ausführungen sind die beiden Koppelstücke 32, 34 dieses mit Einzelsensoren ausgeführten Ausführungsbeispiels deutlich kompakter als beim Ausführungsbeispiel gemäß Figur 32a ausgebildet. Jedes der Koppelstücke 32 ist mittels eines O-Rings 110 in der jeweiligen Ausnehmung 12a, 12b, 12c, 12d abgedichtet. Alle Koppelflächen verlaufen wiederum bündig zur Querwandung 42.

Bei der Abbildung gemäß Figur 32b) würde der Einfachheit halber der Reflektor 52 nicht dargestellt. Dieser sitzt im Prinzip jedoch an der gleichen Position wie der vorbeschriebene Reflektor 52. Dies wird mit einer gestrichelten Linie angedeutet.

Prinzipiell ist der vorrichtungstechnische- und montagetechnische Aufwand beim Ausführungsbeispiel gemäß Figur 32b) größer als beim zuvor beschriebenen Ausführungsbeispiel, da beispielsweise vier Ausnehmungen 12a, 12b, 12c, 12d und vier Einzelsensoren 28a, 28b, 30a, 30b/Koppelstücke 32a, 32b, 34a, 34b und entsprechende O-Ringe 110 vorgesehen werden müssen, während bei dem Ausführungsbeispiel gemäß Figur 31a) lediglich jeweils zwei dieser Komponenten vorhanden sind.

Bei den anhand der Figuren 30, 31, 32 beschriebenen Ausführungsbeispielen wird die Querwandung 42 durch einen Teil des Flanschs 10 ausgebildet. Wie vorstehend erläutert, kann jedoch anstelle der individuellen Ausnehmungen 12a, 12b, 12c, 12d auch eine vergleichsweise große Ausnehmung 12 vorgesehen werden, in die dann ein Systemadapter 26 oder eine Sensorplatte eintaucht, in der dann die Koppelstücke 32, 34 bündig angeordnet sind, so dass der Systemadapter einen Teil des Messkanals und der Querwandung des Ovalprofils 42 ausbildet. Ein derartiges Ausführungsbeispiel ist beispielsweise vorstehend anhand Figur 22 erläutert, bei dieser Variante hat der Systemadapter 26 eine Sensoraufnahme 121 (Sensorplatte 124), in die die Sensoren 28, 30 eingesetzt sind.

Bei einer bevorzugten Lösung ist der Systemadapter 26 selbst als Sensoraufnahme ausgebildet, wobei im Unterschied zu den Ausführungsbeispielen gemäß den Figuren 30, 31, 32 die Koppelstücke 32, 34 bündig in den Systemadapter bzw. die Sensoraufnahme 121/Sensorplatte 124 (diese sind dann praktisch in den Systemadapter 26 integriert) eingesetzt sind.

Die Anmelderin behält sich vor, auf jedes dieser Konzepte (Anordnung der Sensoren/Koppelstücke im Rohrstück oder bündig in einer Sensoraufnahme/einer Sensorplatte oder bündig im Systemadapter) eigene unabhängige Ansprüche zu richten.

Auch bei den Ausführungsbeispielen gemäß den Figuren 21, 22, 23 können die einzelnen Sensoren bzw. deren Koppelstücke 32, 24 mit dem jeweiligen Systemadapter 26 bzw. der Sensorplatte 124/der Sensoraufnahme 121 mittels der Vergussmasse 146 lagefixiert sein.

Offenbart ist ein Durchflussmesser mit zumindest zwei zu einander beabstandeten Messsensoren, vorzugsweise Ultraschall-Sensoren, wobei die Ein- und Auskopplung der Messsignale in bzw. aus einem Fluid über ein Koppelstück erfolgt. Der Messkanal ist erfindungsgemäß im Querschnitt etwa oval- oder trapezförmig ausgebildet.

### Bezugszeichenliste:

- 1: Durchflussmesser
- 2: Messeinsatz / Messansatz
- 4: Gehäuse
- 5: Befestigungsflansch
- 6: Befestigungsflansch
- 8: Rohrstück
- 10: Flansch
- 12: Ausnehmung
- 14: Messkanal
- 16: Messgehäuse
- 20: Innenraum
- 22: Einlaufkörper
- 24: Auslaufkörper
- 26: Systemadapter
- 28: Sensor
- 30: Sensor
- 32: Koppelstück
- 34: Koppelstück
- 36: Gehäuseboden
- 38: Dichtring
- 40: Querwandung
- 42: Querwandung
- 44: Seitenwandung
- 46: Seitenwandung
- 48: Koppelkeil
- 50: Koppelkeil
- 52: Reflektor
- 54: Messbalken
- 56: Aufnahme
- 57: Konsole
- 58: Steuergehäuserahmen
- 60: Elektronikmodul
- 62: Stecker
- 64: Leiterplatte
- 66: Dichtung
- 68: Vergussmasse
- 70: Referenzpfad
- 72: Signalpfad
- 74: Digitalanzeige
- 76: Kommunikationsmodul
- 78: Tasche
- 80: Vorsprung
- 82: Gehäusedeckel
- 84: Scheibe
- 86: Batterypack
- 88: Batteriezuführöffnung
- 90: Halterung
- 92: Deckel
- 94: Schale
- 96: Schale
- 98: Akkublock
- 100: Kontakte
- 102: Abdeckung
- 104: Dichthaube
- 106: Aufnahmeraum
- 108: Ringflansch
- 110: O-Ring
- 112: Klebstoff, Fett, Gel
- 114: Elektrode
- 116: Koppelfläche
- 118: Vorsprung
- 120: Fixierelement
- 121: Sensoraufnahme
- 122: Aufnahme
- 124: Sensorplatte
- 126: Ringnut
- 128: Signalpfad
- 130: Drucksensor
- 132: Kontakt
- 134: Drucksensormodul
- 136: flexible Leitung
- 138: Temperatursensor
- 140: Spiegel
- 142: Schulter
- 144: Aufnahme
- 146: Vergussmasse
- 148: Dichtung
- 150: Schulter für Dichtung

## Patentansprüche

1. Durchflussmesser mit einem an eine von einem Fluid durchströmte Rohrleitung ansetzbaren Messkanal (14), an dem eine Messeinheit gehalten ist, die zumindest zwei zu einander beabstandete Ultraschall-Sensoren (28, 30) hat, wobei die Ein- und Auskopplung der Messsignale in bzw. aus dem Fluid über einen Messbalken (54) oder über ein Koppelstück (32, 34) erfolgt, das den oder die Sensoren (28, 30) aufnimmt, wobei der Messkanal (14) ein Querschnittsprofil aufweist, das etwa in Sende- und Empfangsrichtung der Sensoren (28, 30) eine größere lichte Weite als quer dazu aufweist, wobei
der Messkanal (14) in etwa eine Ovalform mit einer Hochachse (h) und einer Querachse (q) aufweist,
wobei die Hochachse (h) länger ist, als die Querachse (q), und
wobei in Richtung der Hochachse (h) verlaufende Seitenwandungen (44, 46) ausgewölbt sind und mit etwa in Richtung einer Querachse verlaufenden, in etwa planen oder leicht ausgewölbten Querwandungen (40, 42) die Ovalform ausbilden,
oder der Messkanal (14) zu einem den Sensoren (28, 30) gegenüberliegenden Bereich trapezförmig verjüngt ist;
**dadurch gekennzeichnet, dass** in der von den Sensoren (28, 30) entfernten Querwandung (40) des Messkanals (14) ein Reflektor (52) angeordnet ist, der bündig in eine Tasche (78) der Querwandung des Messkanals (14) eingesetzt ist.

2. Durchflussmesser nach Patentanspruch 1, wobei der Messbalken (54) oder die Koppelstücke (32, 34) bündig in eine der Querwandungen (42) eingesetzt sind.

3. Durchflussmesser nach Patentanspruch 2, wobei das Verhältnis der Breite (q) des Messkanals (14) im Scheitel der Auswölbungen zur Breite (b) der Querwandungen (40, 42) größer als 1.2, vorzugsweise etwa 1.3 bis 1.6 ist und wobei das Verhältnis der Höhenerstreckung (h) der Seitenwandung (44, 46) zur Breite (b) der Querwandung (40, 42) größer als 1.5, vorzugsweise etwa 1.5 bis 2 ist.

4. Durchflussmesser nach einem der Patentansprüche 2 und 3, wobei sich jedes Koppelstück (32, 34) bis in die Seitenwandung (44, 46) hinein erstreckt.

5. Durchflussmesser nach einem der vorhergehenden Patentansprüche, wobei der Messbalken (54) oder die Koppelstücke (32, 34) an ein Messgehäuse (16) angesetzt sind, das die Steuerelektronik, weitere Sensoren, ein Batterypack, Kommunikationsmodule und/oder eine Stromversorgung aufnimmt.

6. Durchflussmesser nach einem der vorhergehenden Patentansprüche, wobei das Koppelstück (32, 34) oder der Messbalken (54) einen schräg zu einer Messkanalachse angestellten Koppelkeil (48, 50) hat, auf dem zumindest ein Sensor (28, 30) aufliegt.

7. Durchflussmesser nach einem der vorhergehenden Patentansprüche, wobei das Koppelstück (32, 34) mittels einer Dichtung (38) im Messkanal (14) abgedichtet ist.

8. Durchflussmesser nach Patentanspruch 5 oder 6, wobei die Koppelstücke (32, 34) oder der Messbalken direkt in das Messgehäuse (16) oder mittels einer Sensoraufnahme (121) oder eines Systemadapters (26) an das Messgehäuse (16) angesetzt sind.

9. Durchflussmesser nach einem der vorhergehenden Patentansprüche, wobei der Messkanal (14) einen Flansch (10) hat, der eine Ausnehmung (12) umgreift und an dem ein die Sensoren (28, 30) mittelbar oder unmittelbar tragender Systemadapter (26) oder eine Sensoraufnahme (121) des Messgehäuses (16) befestigt ist, so dass vorzugsweise Koppelflächen (116) der Koppelstücke (32, 34) bündig mit der Umfangswandung des Messkanals (14) verlaufen.

10. Durchflussmesser nach einem der vorhergehenden Patentansprüche, wobei der Messkanal (14) zumindest abschnittsweise in ein Rohrstück (8) eingesetzt ist oder das Rohrstück (8) selbst den Messkanal (14) bildet.

11. Durchflussmesser nach einem der vorhergehenden Patentansprüche, mit einem Gehäuse (4), das zwei Befestigungsflansche (5, 6) aufweist, zwischen denen sich das Rohrstück (8) und/oder der Messkanal (14) erstreckt, wobei der Durchströmungsquerschnitt im Einlauf- bzw. Auslaufbereich der Befestigungsflansche (5, 6) größer als im Messkanal (14) ist.

12. Durchflussmesser nach einem der vorhergehenden Patentansprüche, wobei das Koppelstück (32, 34) aus PEEK, PSU oder PEI oder einem anderen geeigneten Kunststoff hergestellt ist.

13. Durchflussmesser nach einem der vorhergehenden Patentansprüche, wobei in einem Koppelstück (32, 34) zumindest zwei Sensoren (28, 30) aufgenommen sind.

14. Durchflussmesser nach einem der vorhergehenden Patentansprüche, wobei innerhalb eines Koppelstückes (32, 34) oder eines Messbalkens (54) ein Referenzpfad (70) ausgebildet ist.

15. Durchflussmesser nach einem der vorhergehenden Patentansprüche, wobei im Koppelstück (32, 34) oder im Messbalken (54) oder an einem Messgehäuse (16) ein Temperatursensor (138) oder ein Drucksensor (130) oder ein sonstiger Sensor aufgenommen ist.

## Claims

1. Flowmeter having a measurement channel (14) which can be attached to a pipe through which a fluid flows and on which a measurement unit is held which has at least two ultrasonic sensors (28, 30) which are spaced apart from each other, wherein the coupling of the measurement signals into or respectively out of the fluid is performed via a measuring beam (54) or via a coupling element (32, 34) which accommodates the sensor or sensors (28, 30), wherein the measurement channel (14) has a cross-section profile which has a larger clear width approximately in the emitter and receiver direction of the sensors (28, 30) than transverse to it, wherein the measurement channel (14) has an approximately oval shape with a vertical axis (h) and a horizontal axis (q), wherein the vertical axis (h) is longer than the horizontal axis (q), and wherein side walls (44, 46) extending in the direction of the vertical axis (h) are curved out and form the oval shape with horizontal walls (40, 42) which are approximately flat or slightly curved out and extend approximately in the direction of a horizontal axis, or the measurement channel (14) is tapered in a trapezoidal shape to a region opposite the sensors (28, 30); **characterized in that** a reflector (52) is arranged in the horizontal wall (40) of the measurement channel (14) remote from the sensors (28, 30), said reflector being inserted flush into a pocket (78) of the horizontal wall of the measurement channel (14).

2. Flowmeter according to claim 1, wherein the measuring beam (54) or the coupling elements (32, 34) are inserted flush into one of the horizontal walls (42).

3. Flowmeter according to claim 2, wherein the ratio of the width (q) of the measurement channel (14) at the vertex of the curvatures to the width (b) of the horizontal walls (40, 42) is greater than 1.2, preferably about 1.3 to 1.6 and wherein the ratio of the height extension (h) of the side wall (44, 46) to the width (b) of the horizontal wall (40, 42) is greater than 1.5, preferably about 1.5 to 2.

4. Flowmeter according to one of claims 2 and 3, wherein each coupling element (32, 34) extends into the side wall (44, 46).

5. Flowmeter according to one of the preceding claims, wherein the measuring beam (54) or the coupling elements (32, 34) are attached to a measuring housing (16) which accommodates the control electronics, further sensors, a battery pack, communication modules and/or a current supply.

6. Flowmeter according to one of the preceding claims, wherein the coupling element (32, 34) or the measuring beam (54) has a coupling wedge (48, 50) which is inclined with respect to a measurement channel axis and on which at least one sensor (28, 30) rests.

7. Flowmeter according to one of the preceding claims, wherein the coupling element (32, 34) is sealed in the measurement channel (14) by means of a seal (38).

8. Flowmeter according to claim 5 or 6, wherein the coupling elements (32, 34) or the measuring beam are directly attached in the measuring housing (16) or attached to the measuring housing (16) by means of a sensor accommodation (121) or a system adapter (26).

9. Flowmeter according to one of the preceding claims, wherein the measurement channel (14) has a flange (10) which encompasses a recess (12) and to which a system adapter (26) which indirectly or directly carries the sensors (28, 30) or a sensor accommodation (121) of the measuring housing (16) is fastened, so that preferably coupling surfaces (116) of the coupling elements (32, 34) run flush with the peripheral wall of the measuring channel (14).

10. Flowmeter according to one of the preceding claims, wherein the measurement channel (14) is at least in sections inserted into a pipe section (8) or the pipe section (8) itself forms the measurement channel (14).

11. Flowmeter according to one of the preceding claims, having a housing (4) compressing two mounting flanges (5, 6) between which the pipe section (8) and/or the measurement channel (14) extends, wherein the flow cross-section in the inlet area or respectively outlet area of the mounting flanges (5, 6) is larger than in the measurement channel (14).

12. Flowmeter according to one of the preceding claims, wherein the coupling element (32, 34) is made of PEEK, PSU or PEI or another suitable plastic material.

13. Flowmeter according to one of the preceding claims, wherein at least two sensors (28, 30) are accommodated in one coupling element (32, 34).

14. Flowmeter according to one of the preceding claims, wherein a reference path (70) is formed within a coupling element (32, 34) or a measuring beam (54).

15. Flowmeter according to one of the preceding claims, wherein a temperature sensor (138), a pressure sensor (130) or another sensor is accommodated in the coupling element (32, 34) or in the measuring beam (54) or at a measuring housing (16).

## Revendications

1. Débitmètre doté d'un canal de mesure (14) pouvant être appliqué sur une conduite parcourue par un fluide, sur lequel une unité de mesure ayant au moins deux capteurs à ultrasons (28, 30) écartés l'un de l'autre est maintenue, dans lequel l'accouplement et le découplage des signaux de mesure respectivement dans et hors du fluide s'effectue par le biais d'une barre de mesure (54) ou par le biais d'une pièce d'accouplement (32, 34) logeant le ou les capteurs (28, 30), dans lequel le canal de mesure (14) comporte un profil de section transversale présentant approximativement une largeur libre dans la direction d'émission et de réception des capteurs (28, 30) plus élevée que transversalement à celle-ci, dans lequel le canal de mesure (14) se présente sous forme approximativement ovale avec un axe vertical (h) et un axe transversal (q), dans lequel l'axe vertical (h) est plus long que l'axe transversal (q), dans lequel des parois latérales (44, 46) s'étendant dans la direction de l'axe vertical (h) sont bombées et réalisent la forme ovale avec des parois transversales (40, 42) approximativement planes ou légèrement bombées, s'étendant approximativement dans la direction d'un axe transversal, ou le canal de mesure (14) se rétrécit en forme trapézoïdale vers une zone opposée aux capteurs (28, 30) ; **caractérisé en ce que** dans la paroi transversale (40) du canal de mesure (14) éloignée des capteurs (28, 30) est agencé un réflecteur (52), lequel est inséré en affleurement dans une poche (78) de la paroi transversale du canal de mesure (14).

2. Débitmètre selon la revendication 1, dans lequel le barreau de mesure (54) ou la pièce d'accouplement (32, 34) sont insérés en affleurement dans une des parois transversales (42).

3. Débitmètre selon la revendication 2, dans lequel le rapport de la largeur (q) du canal de mesure (14) au sommet des bombements à la largeur (b) des parois transversales (40, 42) est supérieur à 1,2, de préférence approximativement de 1,3 à 1,6, et dans lequel le rapport de l'étendue en hauteur (h) de la paroi latérale (44, 46) à la largeur (b) de la paroi transversale (40, 42) est supérieur à 1,5, de préférence approximativement de 1,5 à 2.

4. Débitmètre selon l'une des revendications 2 et 3, dans lequel chaque pièce d'accouplement (32, 34) s'étend jusque dans la paroi latérale (44, 46).

5. Débitmètre selon l'une des revendications précédentes, dans lequel le barreau de mesure (54) ou les pièces d'accouplement (32, 34) sont fixés à un boîtier de mesure (16), lequel loge l'électronique de commande, des capteurs supplémentaires, un bloc de batterie, un module de communication et/ou une alimentation électrique.

6. Débitmètre selon l'une des revendications précédentes, dans lequel la pièce d'accouplement (32, 34) ou le barreau de mesure (54) a une cale d'accouplement (48, 50) employée en biais par rapport à un axe de canal de mesure, sur laquelle repose au moins un capteur (28, 30).

7. Débitmètre selon l'une des revendications précédentes, dans lequel la pièce d'accouplement (32, 34) est isolée hermétiquement au moyen d'un joint (38) dans le canal de mesure (14).

8. Débitmètre selon la revendication 5 ou 6, dans lequel les pièces d'accouplement (32, 34) ou le barreau de mesure sont fixés directement dans le boîtier de mesure (16) ou, au moyen d'un logement de capteur (121) ou d'un adaptateur de système (26), sur le boîtier de mesure (16).

9. Débitmètre selon l'une des revendications précédentes, dans lequel le canal de mesure (14) a une bride (10), laquelle entoure un évidement (12) et sur laquelle est immobilisé un adaptateur de système (26) portant directement ou indirectement les capteurs (28, 30) ou un logement de capteur (121) du boîtier de mesure (16), de sorte que les surfaces d'accouplement (116) des pièces d'accouplement (32, 34) sont de préférence en affleurement avec la paroi périphérique du canal de mesure (14).

10. Débitmètre selon l'une des revendications précédentes, dans lequel le canal de mesure (14) est inséré au moins partiellement dans une pièce de tube (8) ou la pièce de tube (8) forme elle-même le canal de mesure (14).

11. Débitmètre selon l'une des revendications précédentes, doté d'un boîtier (4) comportant deux collerettes de fixation (5, 6), entre lesquelles s'étend la pièce de tube (8) et/ou le canal de mesure (14), dans lequel la section transversale d'écoulement est plus grande dans la zone d'entrée ou de sortie des collerettes de fixation (5, 6) que dans le canal de mesure (14).

12. Débitmètre selon l'une des revendications précédentes, dans lequel la pièce d'accouplement (32, 34) est fabriquée en PEEK, PSU ou PEI ou un autre plastique adapté.

13. Débitmètre selon l'une des revendications précédentes, dans lequel au moins deux capteurs (28, 30) sont logés dans une pièce d'accouplement (32, 34).

14. Débitmètre selon l'une des revendications précédentes, dans lequel un chemin de référence (70) est réalisé à l'intérieur d'une pièce d'accouplement (32, 34) ou d'un barreau de mesure (54).

15. Débitmètre selon l'une des revendications précédentes, dans lequel dans la pièce d'accouplement (32, 34) ou dans le barreau de mesure (54) ou sur un boîtier de mesure (16) est logé un capteur de température (138) ou un capteur de pression (130) ou un autre capteur.
